# EUROPEAN PATENT SPECIFICATION

(11) **EP 3 262 951 B1**
(45) Date of publication and mention of the grant of the patent: **03.05.2023**
(21) Application number: 17185358.3
(22) Date of filing: 19.09.2013
(51) Int. Cl.: A23G 4/18, A23G 4/20

(54) **ADVANCED GUM FORMING**
VERBESSERTE HERSTELLUNG VON KAUGUMMI
FORMATION DE GOMME AVANCÉE

(30) Priority: 21.09.2012 US 201261703837 P
(43) Date of publication of application: 03.01.2018
(62) Divisional of application: 13771024.0
(73) Proprietor: Intercontinental Great Brands LLC, East Hanover, NJ 07936 (US)
(72) Inventor: Jani, Bharat, East Hanover, NJ 07936, US (US); Scarola, Leonard, East Hanover, NJ 07936 US (US)
(74) Representative: Boult Wade Tennant LLP

(56) References cited:
- EP-A1- 2 206 437
- WO-A1-2010/006385
- WO-A1-2011/090520
- WO-A2-2011/084759
- GB-A- 359 458
- US-A- 4 555 407
- US-A- 4 971 806
- US-A- 5 955 116
- US-A- 5 972 392
- ANONYMOUS: "How gum is made", FSTA,, 1 January 1992 (1992-01-01), XP002687037,

## Description

### FIELD OF THE INVENTION

The present invention relates to gum manufacturing methods and more particularly relates to gum forming methods.

### BACKGROUND OF THE INVENTION

Typically, the process of making and packaging gum products is time-consuming and involves a significant amount of machinery. The process of making and packing gum products can include mixing and producing a finished gum, extruding and forming the finished gum into loaves, conditioning the loaves of the finished gum, extruding the loaves into a continuous thin sheet of the finished gum, rolling the continuous sheet through a series of rollers to a uniform reduced thickness, scoring and dividing sheets into individual scored sheets, conditioning the individual sheets in a conditioning room, dividing sheets into gum pieces, and packaging the gum pieces. Such processes of making and packaging gum products are disclosed in U.S. Patent No. 6,254,373 assigned to the predecessor of interest of the present assignee, and U.S. Patent Application No. 12/352,110 assigned to the present assignee.

Traditional sizing machinery may include a sizing extruder that forces the chewing gum through a small rectangular orifice (e.g. a rectangular orifice having dimensions of about 25 mm by 457 mm). A relatively sizeable amount of force is required as the orifice size gets smaller (e.g. a 30 HP drive may be needed for sufficient output/production volume). Typically, the product exiting the sizing extruder is still much too thick. As a result, many prior systems will typically employ a series of sizing rollers arranged in sequence over a conveyor belt to progressively reduce the thickness of gum from around 25 mm to typically about 2-6 mm. To prevent sticking of gum to the rollers, dusting with a suitable powder agent is typically employed. Thereafter, a scoring roll and dividing roll may be used to generate thin sticks, or somewhat shorter and fatter slabs of gum, or pellets (any of the foregoing sticks, slabs, pellets or other dimension gum maybe referred to as "sized gum.") Such traditional lines also typically will necessitate a fair amount of subsequent cooling and/or conditioning prior to packaging as warm pliable product does not package well.

In addition to sizing concerns, contours and channels can be challenging to form into gum surfaces in gum surfaces, and require numerous added processing steps. In fact, contours formed in certain machine directions can be extremely difficult to create via traditional extrusion methods, if such creation is possible at all.

WO-A1-2011090520 discloses a system and method of forming and sizing chewing gum and/or altering temperature of chewing gum. US-A-5972392 discloses an embossed chewing gum product and method for manufacturing same. GB-A-359458 discloses improvements in chewing gum and the methods of making the same. EP-A1-2206437 discloses a gum manufacturing system with loafing and conditioning features. US-A-4555407 discloses a continuous chewing gum method.

The present invention is directed toward improvements and advancements over such prior methods of making and packaging gum products.

### BRIEF SUMMARY OF THE INVENTION

The present invention provides a method in accordance with claim 1.

Disclosed is a method for forming a contoured chewing gum product, the method including providing a gum sizing system including at least one roller, moving a gum mass toward and through the sizing system in a direction of flow, sizing the gum mass into a substantially continuous gum sheet via the sizing system, the gum sheet having a thickness between about 0.3 mm to 10 mm at at least a portion of the gum sheet via the sizing, creating a thickness variation in the gum sheet via the at least one roller of the sizing system, wherein the creating of the thickness variation and the sizing of the gum mass into the gum sheet occurs substantially simultaneously, and separating the gum sheet into a plurality of gum pieces, at least one of the plurality of pieces including the thickness variation.

Also disclosed is a method for forming a contoured multi-layered chewing gum product, the method including providing a first gum forming system including at least one roller, providing a second gum forming system including at least one roller, moving a first gum composition toward and through the first forming system, moving a second gum composition toward and through the second forming system, creating a thickness variation at at least one formed surface of at least the first gum composition via the at least one roller of the first forming system, stacking the first gum composition and the second gum composition such that the formed surface of the first gum composition is in contact with the second gum composition, forming a multilayer gum composition via the stacking, creating at least one cavity in the multi-layer gum composition via presence of at least the thickness variation in the formed surface in contact with the second gum composition, and separating the multi-layer gum composition into a plurality of gum pieces, at least one of the plurality of pieces including the at least one cavity.

Additionally disclosed is a method for forming a chewing gum product, the method including providing a gum sizing system including at least one roller, moving a gum mass toward and through the sizing system in a direction of flow, sizing the gum mass into a substantially continuous gum sheet via the sizing system, the gum sheet having a thickness between about 0.3 mm to 10 mm at at least a portion of the gum sheet via the sizing, and separating or substantially separating the gum sheet into a plurality of gum pieces via the at least one roller, the separating or substantially separating occurring substantially simultaneously with the sizing.

Further disclosed is a method for forming a multi-layered chewing gum product, the method including providing a first gum forming system including at least one roller, providing a second gum forming system including at least one roller, moving a first gum composition toward and through the first forming system; moving a second gum composition toward and through the second forming system, substantially separating a plurality of first gum pieces from the first gum composition via the at least one roller, while maintaining first a web connection between the first gum pieces and the first gum composition, substantially separating a plurality of second gum pieces from the second gum composition via the at least one roller, while maintaining a second web connection between the second gum pieces and the second gum composition, stacking at least one of the first gum pieces with at least one of the second gum pieces, and forming a multilayer gum composition via the stacking.

### BRIEF DESCRIPTION OF THE DRAWINGS

The accompanying drawings incorporated in and forming a part of the specification embodies several aspects of the present invention and, together with the description, serve to explain the principles of the invention. In the drawings:
Figure 1 is a schematic view of a system for forming contoured chewing gum;
Figure 1A is a schematic elevation view of an exemplary roller for use in the system of Figure 1;
Figure 1B is an elevation view of a gum composition formed by the roller of Figure 1A;
Figure 2A is a schematic elevation view of an exemplary roller for use in the system of Figure 1;
Figure 2B is an elevation view of a gum composition formed by the roller of Figure 2A;
Figure 3A is a schematic elevation view of an exemplary roller for use in the system of Figure 1;
Figure 3B is an elevation view of a gum composition formed by the roller of Figure 3A;

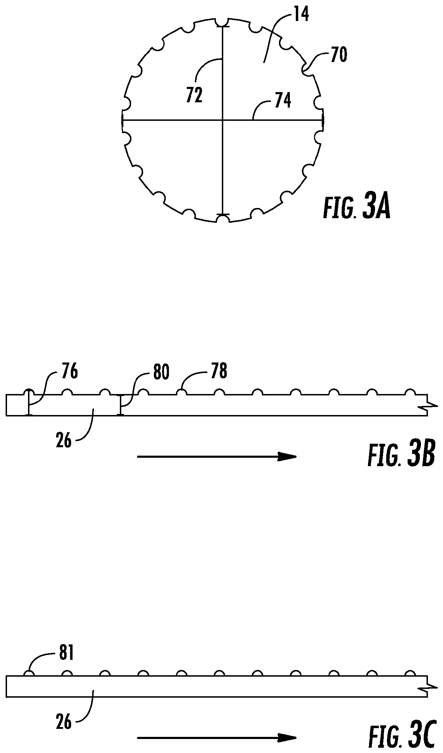

Figure 3B is an elevation view of another gum composition formed by the roller of Figure 3A;

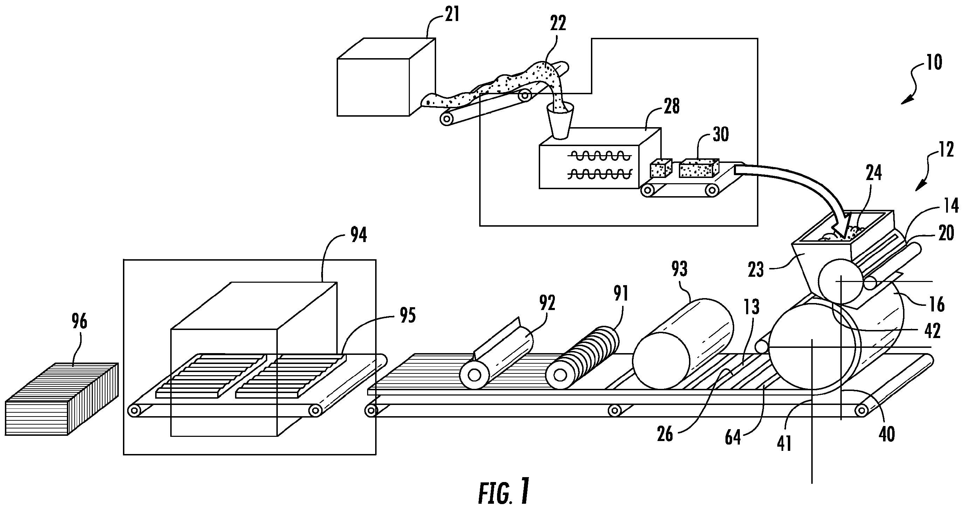

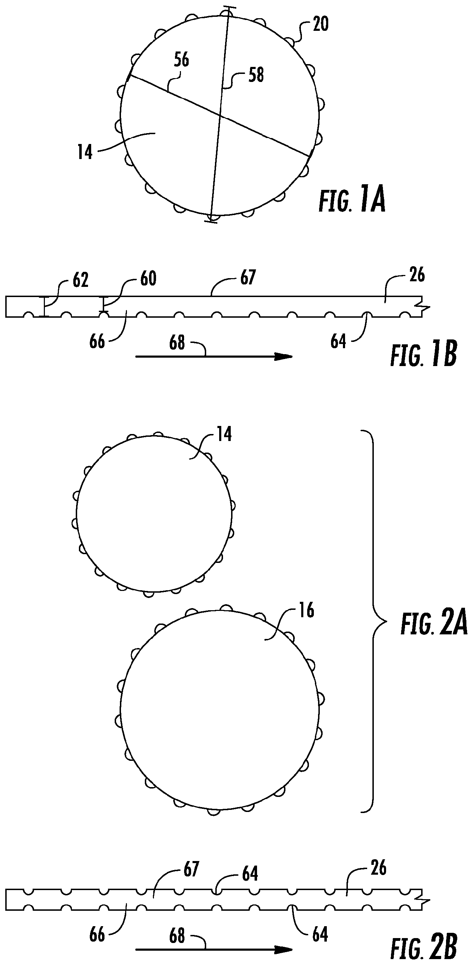

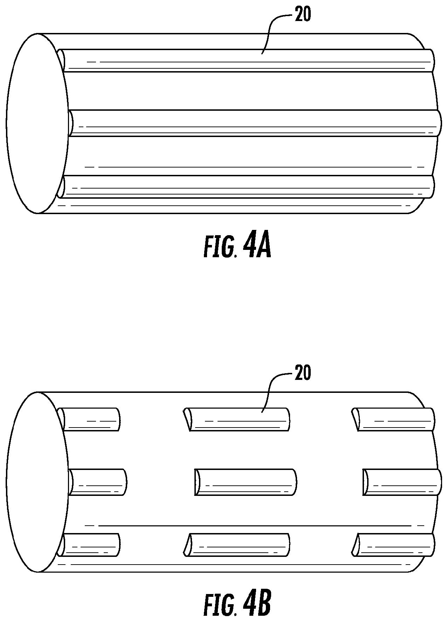

Figure 4A is a schematic perspective view of an exemplary roller for use in the system of Figure 1;
Figure 4B is a schematic perspective view of an exemplary roller for use in the system of Figure 1;

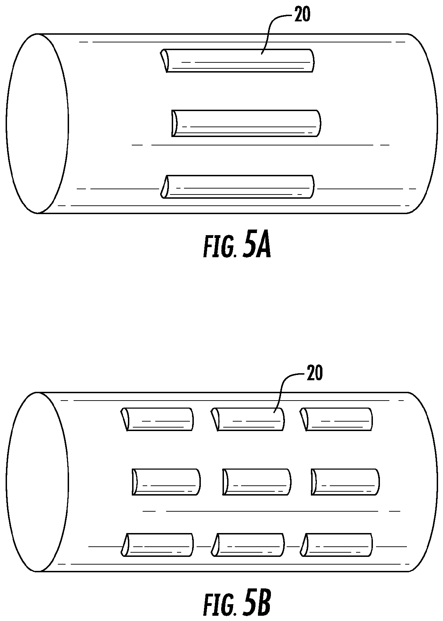

Figure 5A is a schematic perspective view of an exemplary roller for use in the system of Figure 1;
Figure 5B is a schematic perspective view of an exemplary roller for use in the system of Figure 1;

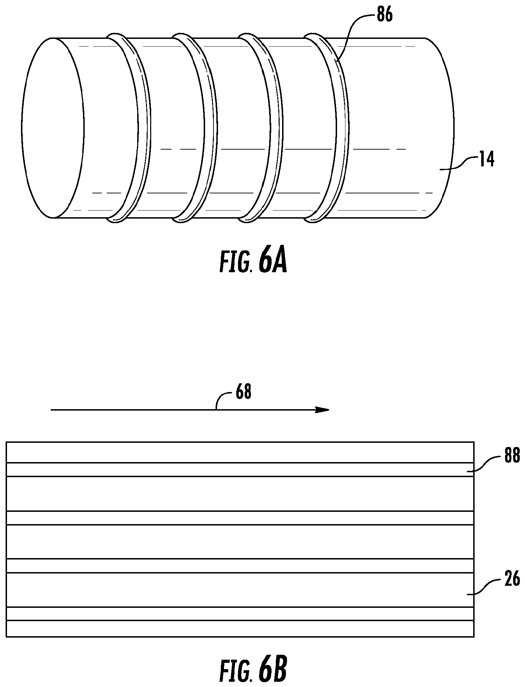

Figure 6A is a schematic perspective view of an exemplary roller for use in the system of Figure 1;
Figure 6B is a plan view of a gum composition formed by the roller of Figure 6A;

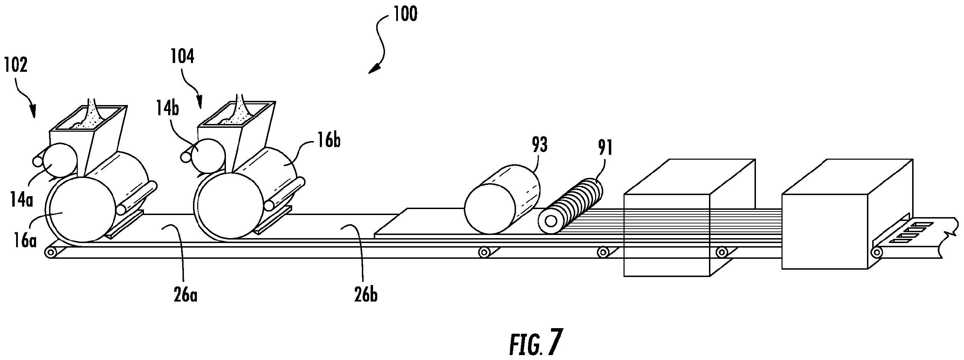

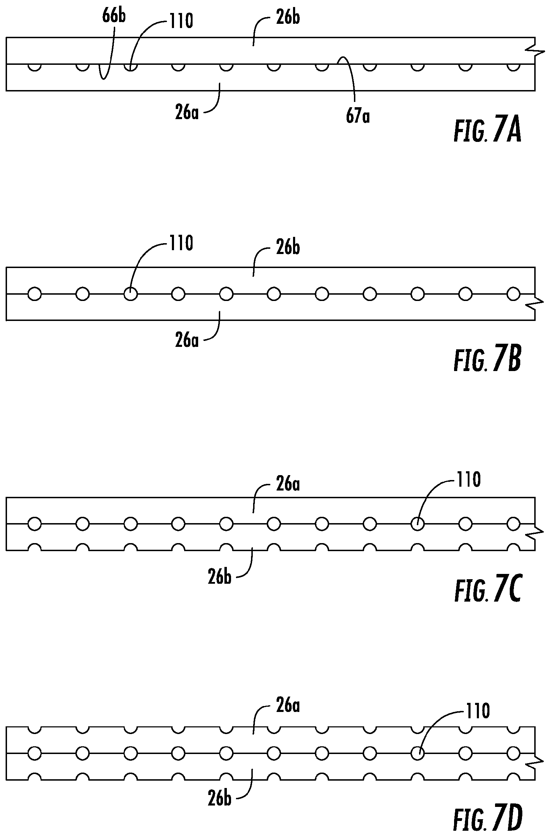

Figure 7 is a schematic view of another system for forming contoured chewing gum;
Figures 7A-7D are elevation views of various gum composition embodiments formed by the system of Figure 7;

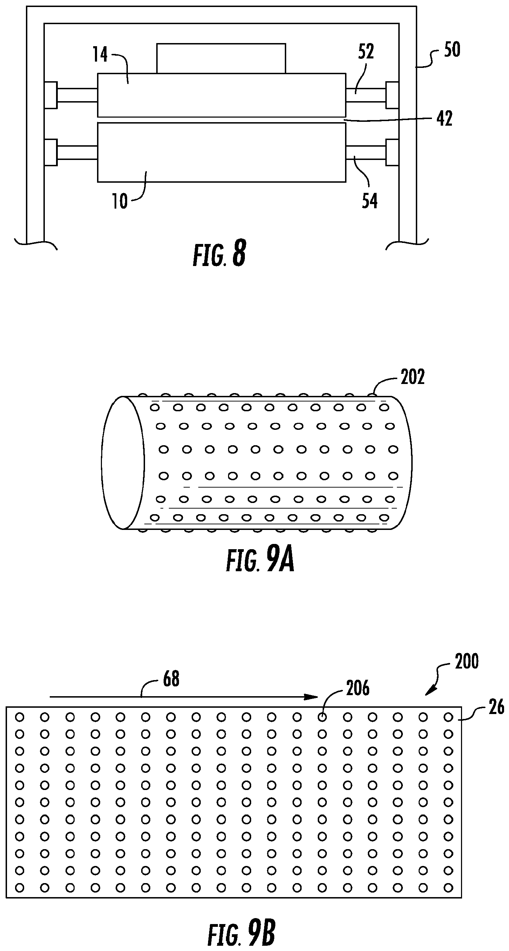

Figure 8 is a partial, schematic elevation view of systems shown in Figures 1 and 7;
Figure 9A is a schematic perspective view of an exemplary roller for use in the system of Figure 1;
Figure 9B is a plan view of a gum composition formed by the roller of Figure 9A;

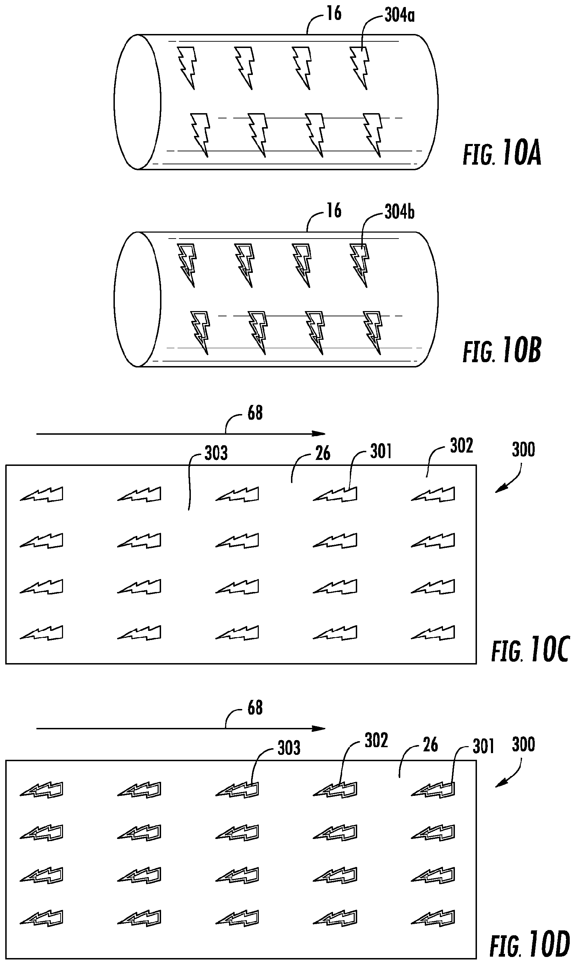

Figure 10A is a schematic perspective view of an exemplary roller for use in the system of Figure 1;
Figure 10B is a schematic perspective view of another exemplary roller for use in the system of Figure 1;
Figure 10C is a plan view of a gum composition formed by the roller of Figure 10A; and
Figure 10D is a plan view of a gum composition formed by the roller of Figure 10B.

While the invention will be described in connection with certain preferred embodiments, there is no intent to limit it to those embodiments.

### DETAILED DESCRIPTION OF THE INVENTION

### Chewing Gum Generally

Chewing gum in large part includes components that are not swallowed, such as gum base, which is the rubber-like chewing component. Chewing gum also comprises a consumed portion including sweeteners, flavors and the like, and may also include other candy or food product integrated therewith in layers or as ingredients. The gum base is relatively unique in food processing in that it introduces the material with a resiliency and elasticity relative to processing and also provides a relatively non-conductive or insulating material that does not transfer heat very well. This provides unique processing difficulties. Relative to processing, the temperature of the processed gum product greatly affects viscosity as well as other processing characteristics such as elasticity and resiliency.

Further, different types of gum recipes will also alter processing considerations, and there generally is a desire to run different gum recipes on the same equipment or lines. Some of the ingredients handle processing quite well. Other ingredients such as flavors may be subject to flash off due to heat, thereby diminishing the amount of flavor in the final consumable product. Other ingredients such as encapsulated sweeteners, are sensitive to shear forces (e.g. due to substantial pressure, intense mixing, processing force and the like) and thus can be damaged during processing. These factors all provide different challenges relative to sizing the gum to a small bit size portion and conditioning of the gum for packaging in gum packaging. For purpose of understanding, some lexicography and typical gum composition components will be discussed below.

As used herein, "gum structure," "gum mass," "gum sheets," "chewing gum," or "chewing gum composition" may include, but are not limited to, compositions ranging from and inclusive of compounded elastomer to finished gum, which may include compounded elastomer in addition to some compounding aids, master batch gum base, compounded elastomer in addition to some subsequent gum ingredients, compounded elastomer in addition to some gum base ingredients and some subsequent gum ingredients, gum base, gum base in addition to some subsequent gum ingredients, master batch finished gum, and finished gum.

Before explaining methods according to the present invention, it is helpful to discuss the general composition of several typical chewing gums that are or may be included in forming the most complex chewing gum, namely finished gum, that can be formed using embodiments of the systems and methods of the present invention.

A "finished gum", as used herein, will refer to a chewing gum that is generally ready for preparation to distribute the product to the consumer. As such, a finished gum may still require temperature conditioning, forming, shaping, packaging and coating. However, the gum composition itself is generally finished. Not all finished gums have the same ingredients or the same amounts of individual ingredients. By varying the ingredients and amounts of ingredients, textures, flavor and sensations, among other things, can be varied to provide differing characteristics to meet the needs of users.

As is generally well known, a finished gum generally includes a water soluble bulk portion, a water insoluble gum base portion, and one or more flavoring agents. The water soluble portion dissipates over a period of time during chewing. The gum base portion is retained in the mouth throughout the chewing process. A finished gum is typically ready for user consumption.

A "finished gum base", as used herein, will refer to a chewing gum that includes a sufficient combination of gum base ingredients that need only be combined with subsequent gum ingredients to form a finished gum. A finished gum base is a chewable visco-elastic material that includes at least a viscous component, an elastic component, and a softener component. For example, a typical gum base may include elastomer, at least some of the filler, resin and/or plasticizer, polyvinyl acetate, and a softener (such as an oil, fat or wax). Merely compounded elastomer without the addition of any softener, for example, would not be a finished gum base because it would not be considered useable in a finished chewing gum because of its difficulty, if not impossibility, to chew.

### Ingredients

Chewing gum may include a vast number of ingredients in various categories. Gum mixing systems and methods according to various embodiments of the present invention may be used to mix any and all known ingredients including, but not limited to, ingredients in the following ingredient categories: elastomers, bulking agents, elastomer plasticizers (which includes resins), elastomer solvents, plasticizers, fats, waxes, fillers, antioxidants, sweeteners (e.g. bulk sweeteners and high intensity sweeteners), syrups/fluids, flavors, sensates, potentiators, acids, emulsifiers, colors, and functional ingredients.

The insoluble gum base generally includes ingredients falling under the following categories: elastomers, elastomer plasticizers (resins or solvents), plasticizers, fats, oils, waxes, softeners and fillers. Further discussion of representative ingredients within each category will be provided later on. The gum base may constitute between 5-95% by weight of a finished gum, more typically 10-50% by weight of the finished gum, and most commonly 20-30% by weight of the finished gum.

The water soluble portion of finished gum may includes subsequent gum ingredients falling under the following categories: softeners, bulk sweeteners, high intensity sweeteners, flavoring agents, acids, additional fillers, functional ingredients and combinations thereof. Softeners are added to the gum in order to optimize the chewability and mouth feel of the gum. The softeners, which are also known as plasticizers, plasticizing agents or emulsifiers, generally constitute between about 0.5-15% by weight of the chewing gum. Bulk sweeteners constitute between 5-95% by weight of the chewing gum, more typically 20-80% by weight of the gum and most commonly 30-60% by weight of the gum. High intensity sweeteners may also be present and are commonly used with sugarless sweeteners. When used, high intensity sweeteners typically constitute between 0.001-5% by weight of the chewing gum, preferably between 0.01-3% by weight of the chewing gum. Typically, high intensity sweeteners are at least 20 times sweeter than sucrose.

Flavor should generally be present in the gum in an amount within the range of about 0.1-15% by weight of the chewing gum, preferably between about 0.2-5% by weight of the gum, most preferably between about 0.5-3% by weight of the gum. Natural and artificial flavoring agents may be used and combined in any sensorially acceptable fashion.

When included, acids typically constitute between about 0.001-5% by weight of the chewing gum.

Optional ingredients such as colors, functional ingredients and additional flavoring agents may also be included in chewing gum.

Now that a more general overview has been provided as to general common ingredients, more details about individual categories of ingredients and examples of specific ingredients with in various categories will be provided below.

### Elastomers

The elastomers (rubbers) employed in the chewing gum will vary greatly depending upon various factors such as the type of chewing gum desired, the consistency of chewing gum desired and the other components used in the chewing gum. The elastomer may be any water-insoluble polymer known in the art, and includes those polymers utilized for chewing gums and bubble gums. Illustrative examples of suitable polymers chewing gum, and particularly gum bases, include both natural and synthetic elastomers. For example, those polymers which are suitable in chewing gum include, without limitation, natural substances (of vegetable origin) such as caspi, chicle, natural rubber, crown gum, nispero, rosidinha, jelutong, guayule, perillo, niger gutta, tunu, balata, guttapercha, lechi capsi, sorva, gutta kay, and the like, and combinations thereof. Examples of synthetic elastomers include, without limitation, styrene-butadiene copolymers (SBR), polyisobutylene, isobutylene-isoprene copolymers, polyethylene, polyvinyl acetate and the like, and combinations thereof. Elastomers constitute between about 10% to about 60% by weight and more commonly between about 35-40% by weight of the chewing gum.

Additional useful polymers include: crosslinked polyvinyl pyrrolidone, polymethylmethacrylate; copolymers of lactic acid, polyhydroxyalkanoates, plasticized ethylcellulose, polyvinyl acetatephthalate and combinations thereof.

### Elastomer Plasticizers

The chewing gum may contain elastomer solvents, also referred to herein as elastomer plasticizers, to aid in softening the elastomeric materials. Such elastomer solvents may include those elastomer solvents known in the art, for example, terpinene resins such as polymers of alpha-pinene, beta-pinene or d-limonene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the chewing gum in amounts from about 2% to about 15%, and preferably from about 7% to about 11%, by weight of the chewing gum.

### Plasticizers

The chewing gum may also include plasticizers or softeners, which also fall under the Wax category described below, to provide a variety of desirable textures and consistency properties. Because of the low molecular weight of these ingredients, the plasticizers and softeners are able to penetrate the fundamental structure of the chewing gum making it plastic and less viscous. Useful plasticizers and softeners include triacetin, medium chain triglycerides of non-hydrogenated, partially hydrogenated cotton seed oil, soybean oil, palm oil, palm kernel oil, coconut oil, safflower oil, tallow oil, cocoa butter, terepene resins derived from alpha-pinene, lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, hydrogenated vegetable oils, petroleum waxes such as polyurethane waxes, polyethylene waxes, paraffin waxes, sorbitan monostearate, tallow, propylene glycol, mixtures thereof, and the like, may also be incorporated into the chewing gum. The plasticizers and softeners are generally employed in the chewing gum in amounts up to about 20% by weight of the chewing gum, and more specifically in amounts from about 9% to about 17%, by weight of the chewing gum.

Plasticizers may also include hydrogenated vegetable oils, soybean oil and cottonseed oil which may be employed alone or in combination. These plasticizers provide the chewing gum with good texture and soft chew characteristics. These plasticizers and softeners are generally employed in amounts from about 5% to about 14%, and more specifically in amounts from about 5% to about 13.5%, by weight of the chewing gum.

### Fats

Suitable oils and fats include partially hydrogenated vegetable or animal fats, such as coconut oil, palm kernel oil, beef tallow, and lard, among others. These ingredients when used are generally present in amounts up to about 7%, and preferably up to about 3.5%, by weight of the chewing gum.

### Waxes

In some embodiments, the chewing gum may include wax. Waxes that are used may include synthetic waxes such as waxes containing branched alkanes and copolymerized with monomers such as, but not limited to, polypropylene and polyethylene and Fischer-Tropsch type waxes, petroleum waxes such as paraffin, and microcrystalline wax, and natural waxes such as beeswax, candellia, carnauba, and polyethylene wax, rice bran and petroleum.

It softens the polymeric mixture and improves the elasticity of the chewing gum. When present, the waxes employed will have a melting point below about 60°C, and preferably between about 45°C and about 55°C. The low melting wax may be a paraffin wax. The wax may be present in the chewing gum in an amount from about 6% to about 10%, and preferably from about 7% to about 9.5%, by weight of the chewing gum.

In addition to the low melting point waxes, waxes having a higher melting point may be used in the chewing gum in amounts up to about 5%, by weight of the chewing gum. Such high melting waxes include beeswax, vegetable wax, candelilla wax, camuba wax, most petroleum waxes, and the like, and mixtures thereof.

### Fillers

In some embodiments, chewing gum is formed using the systems and methods according to the teachings of the invention may also include effective amounts of bulking agents such as mineral adjuvants which may serve as fillers and textural agents. Useful mineral adjuvants include calcium carbonate, magnesium carbonate, alumina, aluminum hydroxide, aluminum silicate, talc, clay, titanium oxide, ground limestone, monocalcium phosphate, tricalcium phosphate, dicalcium phosphate, calcium sulfate and the like, and mixtures thereof. These fillers or adjuvants may be used in the chewing gum in various amounts. The amount of filler, may be present in an amount from about zero to about 40%, and more specifically from about zero to about 30%, by weight of the chewing gum. In some embodiments, the amount of filler will be from about zero to about 15%, more specifically from about 3% to about 11%.

### Antioxidants

Antioxidants can include materials that scavenge free radicals. In some embodiments, antioxidants can include but are not limited to ascorbic acid, citric acid (citric acid may be encapsulated), rosemary oil, vitamin A, vitamin E, vitamin E phosphate, butylated hydroxytoluene (BHT), butylated hydroxyanisole (BHA), propyl gallate, tocopherols, di-alpha-tocopheryl phosphate, tocotrienols, alpha lipoic acid, dihydrolipoic acid, xanthophylls, beta cryptoxanthin, lycopene, lutein, zeaxanthin, astaxanthin, beta-carotene, carotenes, mixed carotenoids, polyphenols, flavonoids, and combinations thereof.

### Subsequent Ingredients

Chewing gum may also include amounts of conventional additives selected from the group consisting of sweetening agents (bulk and high intensity sweeteners), softeners, emulsifiers, fillers, bulking agents (carriers, extenders, bulk sweeteners), flavoring agents (flavors, flavorings), coloring agents (colorants, colorings), functional ingredients, and the like, and mixtures thereof. Some of these additives may serve more than one purpose. For example, in sugarless chewing gum, a sweetener, such as maltitol or other sugar alcohol, may also function as a bulking agent and particularly a water soluble bulking agent.

### Bulk Sweeteners

Suitable Bulk Sweeteners include monosaccharides, disaccharides and polysaccharides such as xylose, ribulose, glucose (dextrose), lactose, mannose, galactose, fructose (levulose), sucrose (sugar), maltose, invert sugar, partially hydrolyzed starch and corn syrup solids, sugar alcohols, randomly bonded glucose polymers such as those polymers distributed under the tradename LitesseTM which is the brand name for polydextrose and is manufactured by Danisco Sweeteners, Ltd. of 41-51 Brighton Road, Redhill, Surryey, RH1 6YS, United Kingdom; isomalt (a racemic mixture of alpha-D-glucopyranosyl-1,6-mannitol and alpha-D-glucopyranosyl-1,6-sorbitol manufactured under the tradename PALATINIT^{™} by Palatinit Sussungsmittel GmbH of Gotlieb-Daimler-Strause 12 a, 68165 Mannheim, Germany); maltodextrins; hydrogenated starch hydrolysates; hydrogenated hexoses; hydrogenated disaccharides; minerals, such as calcium carbonate, talc, titanium dioxide, dicalcium phosphate; celluloses; and mixtures thereof.

Suitable sugarless bulk sweeteners include sorbitol, xylitol, mannitol, galactitol, lactitol, maltitol, erythritol, isomalt and mixtures thereof. Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN^{®}, a commercially available product manufactured by Roquette Freres of France, and HYSTAR^{®}, a commercially available product manufactured by SPI Polyols, Inc. of New Castle, Delaware, are also useful.

Some embodiments of chewing gum may include a specific polyol composition including at least one polyol which is from about 30% to about 80% by weight of the chewing gum, and specifically from 50% to about 60%. In some embodiments, such chewing gum may have low hygroscopicity. The polyol composition may include any polyol known in the art including, but not limited to maltitol, sorbitol, erythritol, xylitol, mannitol, isomalt, lactitol and combinations thereof. LycasinTM which is a hydrogenated starch hydrolysate including sorbitol and maltitol, may also be used.

The amount of the polyol composition or combination of polyols used in a chewing gum depends on many factors including the type of elastomers and polyols used in the chewing gum. For example, wherein the total amount of the polyol composition is in the range of about 40% to about 65% based on the weight of the chewing gum, the amount of isomalt may be from about 40% to about 60% in addition to an amount of sorbitol from about 0 up to about 10%, more specifically, an amount of isomalt may be from about 45% to about 55% in combination with sorbitol from about 5% to about 10% based on the weight of the chewing gum.

The polyol composition which may include one or more different polyols which may be derived from a genetically modified organism ("GMO") or GMO free source. For example, the maltitol may be GMO free maltitol or provided by a hydrogenated starch hydrolysate. For the purposes of this invention, the term "GMO-free" refers to a composition that has been derived from process in which genetically modified organisms are not utilized.

The sweetening agents which may be included in some chewing gum formed using systems and methods according to the teachings of the present invention may be any of a variety of sweeteners known in the art and may be used in many distinct physical forms well-known in the art to provide an initial burst of sweetness and/or a prolonged sensation of sweetness. Without being limited thereto, such physical forms include free forms, such as spray dried, powdered, beaded forms, encapsulated forms, and mixtures thereof.

### High Intensity Sweeteners

Desirably, the sweetener is a high intensity sweetener such as aspartame, neotame, sucralose, monatin, and acesulfame potassium (Ace-K). The high intensity sweetener can be in an encapsulated form, a free form, or both.

In general, an effective amount of sweetener may be utilized to provide the level of sweetness desired, and this amount may vary with the sweetener selected. In some embodiments the amount of sweetener may be present in amounts from about 0.001% to about 3%, by weight of the gum, depending upon the sweetener or combination of sweeteners used. The exact range of amounts for each type of sweetener may be selected by those skilled in the art.

The sweeteners involved may be selected from a wide range of materials including water-soluble sweeteners, water-soluble artificial sweeteners, water-soluble sweeteners derived from naturally occurring water-soluble sweeteners, dipeptide based sweeteners, and protein based sweeteners, including mixtures thereof. Without being limited to particular sweeteners, representative categories and examples include:
(a) water-soluble sweetening agents such as dihydrochalcones, monellin, steviosides, lo han quo, lo han quo derivatives, glycyrrhizin, dihydroflavenol, and sugar alcohols such as sorbitol, mannitol, maltitol, xylitol, erythritol, and L-aminodicarboxylic acid aminoalkenoic acid ester amides, such as those disclosed in U.S. Pat. No. 4,619,834;
(b) water-soluble artificial sweeteners such as soluble saccharin salts, i.e., sodium or calcium saccharin salts, cyclamate salts, the sodium, ammonium or calcium salt of 3,4-dihydro-6-methyl-1,2,3-oxathiazine-4-one-2,2-dioxide, the potassium salt of 3,4-dihydro-6-methyl-1,2,3-oxathiazine-4-one-2,2-dioxide (Acesulfame-K), the free acid form of saccharin, and mixtures thereof;
(c) dipeptide based sweeteners, such as L-aspartic acid derived sweeteners, such as L-aspartyl-L-phenylalanine methyl ester (Aspartame), N-[N-(3,3-dimethylbutyl)-L-α-aspartyl]-L-phenylalanine 1-methyl ester (Neotame), and materials described in U.S. Pat. No. 3,492,131, L-alphaaspartyl-N-(2,2,4,4-tetramethyl-3-thietanyl)-D-alaninamide hydrate (Alitame), methyl esters of L-aspartyl-L-phenylglycerine and L-aspartyl-L-2,5-dihydrophenyl-glycine, L-aspartyl-2,5-dihydro-L-phenylalanine; L-aspartyl-L-(l-cyclohexen)-alanine, and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrose derivatives include but are not limited to: 1-chloro-1'-deoxysucrose; 4-chloro-4-deoxy-alpha-D-galactopyranosyl-alpha-D-fructofuranoside, or 4-chloro-4-deoxygalactosucrose; 4-chloro-4-deoxy-alpha-D-galactopyranosyl-1-chloro-l-deoxy-beta-D-fructo-f uranoside, or 4,1'-dichloro-4,1'-dideoxygalactosucrose; 1',6'-dichloro1',6'-dideoxysucrose; 4-chloro-4-deoxy-alpha-D-galactopyranosyl-1,6-dichloro-1,6-dideoxy-beta-D- fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D- fructofuranoside, or 4,6,6'-trichloro-4,6,6'-trideoxygalactosucrose; 6,1',6'-trichloro-6,1',6'-trideoxysucrose; 4,6-dichloro-4,6-dideoxy-alpha-D-galacto-pyranosyl-1,6-dichloro-1,6-dideox y-beta-D-fructofuranoside, or 4,6,1',6'-tetrachloro4,6,1',6'-tetradeoxygalacto-sucrose; and 4,6,1',6'-tetradeoxy-sucrose, and mixtures thereof;
(e) protein based sweeteners such as thaumaoccous danielli (Thaumatin I and II) and talin; and
(f) the sweetener monatin (2-hydroxy-2-(indol-3-ylmethyl)-4-aminoglutaric acid) and its derivatives.

The intense sweetening agents may be used in many distinct physical forms well-known in the art to provide an initial burst of sweetness and/or a prolonged sensation of sweetness. Without being limited thereto, such physical forms include free forms, spray dried forms, powdered forms, beaded forms, encapsulated forms, and mixtures thereof. In one embodiment, the sweetener is a high intensity sweetener such as aspartame, sucralose, and acesulfame potassium (e.g., Ace-K or acesulfame-K). Several representative forms of encapsulated sweeteners and methods of encapsulating sweeteners are illustrated in U.S. Patent Nos. 7,244,454; 7,022,352; 6,759,066; 5,217,735 ;5,192,561; 5,164,210; 4,997,659 and 4,981,698 as well as U.S. Patent Application Publication Nos. 2007/0231424; 2004/0096544; 2005/0112236; and 2005/0220867.

The active component (e.g., sweetener), which is part of the delivery system, may be used in amounts necessary to impart the desired effect associated with use of the active component (e.g., sweetness). In general, an effective amount of intense sweetener may be utilized to provide the level of sweetness desired, and this amount may vary with the sweetener selected. The intense sweetener may be present in amounts from about 0.001% to about 3%, by weight of the composition, depending upon the sweetener or combination of sweeteners used. The exact range of amounts for each type of sweetener may be selected by those skilled in the art.

### Syrups

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum. Other syrups may include corn syrup and maltitol syrup.

### Flavorants

In some embodiments, flavorants may include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, yazu, sudachi, and fruit essences including apple, pear, peach, grape, blueberry, strawberry, raspberry, cherry, plum, pineapple, apricot, banana, melon, apricot, ume, cherry, raspberry, blackberry, tropical fruit, mango, mangosteen, pomegranate, papaya and so forth. Other potential flavors whose release profiles can be managed include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with the cooling agents, described herein below. In some embodiments, flavorants may chose from geraniol, linalool, nerol, nerolidal, citronellol, heliotropine, methyl cyclopentelone, ethyl vanillin, maltol, ethyl maltol, furaneol, alliaceous compounds, rose type compounds such as phenethanol, phenylacetic acid, nerol, linalyl esters, jasmine, sandlewood, patchouli, and/or cedarwood.

In some embodiments, other flavorings include aldehydes and esters such as cinnamyl acetate, cinnamaldehyde, citral diethylacetal, dihydrocarvyl acetate, eugenyl formate, p methylamisol, and so forth may be used. Generally any flavoring or food additive such as those described in Chemicals Used in Food Processing, publication 1274, pages 63 258, by the National Academy of Sciences, may be used. These may include natural as well as synthetic flavors.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha citral (lemon, lime), neral, i.e., beta citral (lemon, lime), decanal (orange, lemon), ethyl vanillin (vanilla, cream), heliotrope, i.e., piperonal (vanilla, cream), vanillin (vanilla, cream), alpha amyl cinnamaldehyde (spicy fruity flavors), butyraldehyde (butter, cheese), valeraldehyde (butter, cheese), citronellal (modifies, many types), decanal (citrus fruits), aldehyde C 8 (citrus fruits), aldehyde C 9 (citrus fruits), aldehyde C 12 (citrus fruits), 2 ethyl butyraldehyde (berry fruits), hexenal, i.e., trans 2 (berry fruits), tolyl aldehyde (cherry, almond), veratraldehyde (vanilla), 2,6 dimethyl 5 heptenal, .e., melonal (melon), 2,6 dimethyloctanal (green fruit), and 2 dodecenal (citrus, mandarin), cherry, grape, blueberry, blackberry, strawberry shortcake, and mixtures thereof.

In some embodiments, flavoring agents are used at levels that provide a perceptible sensory experience i.e. at or above their threshold levels. In other embodiments, flavoring agents are used at levels below their threshold levels such that they do not provide an independent perceptible sensory experience. At subthreshold levels, the flavoring agents may provide an ancillary benefit such as flavor enhancement or potentiation.

In some embodiments, a flavoring agent may be employed in either liquid form and/or dried form. When employed in the latter form, suitable drying means such as spray drying the liquid may be used. Alternatively, the flavoring agent may be absorbed onto water soluble materials, such as cellulose, starch, sugar, maltodextrin, gum arabic and so forth or may be encapsulated. In still other embodiments, the flavoring agent may be adsorbed onto silicas, zeolites, and the like.

In some embodiments, the flavoring agents may be used in many distinct physical forms. Without being limited thereto, such physical forms include free forms, such as spray dried, powdered, beaded forms, encapsulated forms, and mixtures thereof.

Illustrations of the encapsulation of flavors as well as other additional components can be found in the examples provided herein. Typically, encapsulation of a component will result in a delay in the release of the predominant amount of the component during consumption of a chewing gum that includes the encapsulated component (e.g., as part of a delivery system added as an ingredient to the chewing gum). In some embodiments, the release profile of the ingredient (e.g., the flavor, sweetener, etc.) can be managed by managing various characteristics of the ingredient, delivery system containing the ingredient, and/or the chewing gum containing the delivery system and/or how the delivery system is made. For example, characteristics might include one or more of the following: tensile strength of the delivery system, water solubility of the ingredient, water solubility of the encapsulating material, water solubility of the delivery system, ratio of ingredient to encapsulating material in the delivery system, average or maximum particle size of ingredient, average or maximum particle size of ground delivery system, the amount of the ingredient or the delivery system in the chewing gum, ratio of different polymers used to encapsulate one or more ingredients, hydrophobicity of one or more polymers used to encapsulate one or more ingredients, hydrophobicity of the delivery system, the type or amount of coating on the delivery system, the type or amount of coating on an ingredient prior to the ingredient being encapsulated, etc.

### Sensate Ingredients

Sensate compounds can include cooling agents, warming agents, tingling agents, effervescent agents, and combinations thereof. A variety of well known cooling agents may be employed. For example, among the useful cooling agents are included xylitol, erythritol, dextrose, sorbitol, menthane, menthone, ketals, menthone ketals, menthone glycerol ketals, substituted p menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p menthane, 2 mercapto cyclo decanone, hydroxycarboxylic acids with 2 6 carbon atoms, cyclohexanamides, menthyl acetate, menthyl salicylate, N,2,3 trimethyl 2 isopropyl butanamide (WS 23), N ethyl p menthane 3 carboxamide (WS 3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(l-menthoxy)propan-1-ol, 3-(l-menthoxy)butan-1-ol, l-menthylacetic acid N-ethylamide, 1-menthyl-4-hydroxypentanoate, l-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT^{®} type MGA); 3-1-menthoxypropane-1,2-diol (from Takasago, FEMA 3784); and menthyl lactate; (from Haarman & Reimer, FEMA 3748, tradename FRESCOLAT^{®} type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; and Menthol methyl ether, and menthyl pyrrolidone carboxylate among others. These and other suitable cooling agents are further described in the following U.S. patents: U.S. 4,230,688; 4,032,661; 4,459,425; 4,136,163; 5,266,592; 6,627,233.

In some embodiments, warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. In some embodiments, useful warming compounds can include vanillyl alcohol n butylether (TK 1000) supplied by Takasago Perfumary Company Limited, Tokyo, Japan, vanillyl alcohol n propylether, vanillyl alcohol isopropylether, vanillyl alcohol isobutylether, vanillyl alcohol n aminoether, vanillyl alcohol isoamyleather, vanillyl alcohol n hexyleather, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropyl alcohol, iso amylalcohol, benzyl alcohol, glycerine, and combinations thereof.

In some embodiments, a tingling sensation can be provided. One such tingling sensation is provided by adding jambu, oleoresin, or spilanthol to some examples. In some embodiments, alkylamides extracted from materials such as jambu or sanshool can be included. Additionally, in some embodiments, a sensation is created due to effervescence. Such effervescence is created by combining an alkaline material with an acidic material. In some embodiments, an alkaline material can include alkali metal carbonates, alkali metal bicarbonates, alkaline earth metal carbonates, alkaline earth metal bicarbonates and mixtures thereof. In some embodiments, an acidic material can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Patent No. 6,780,443.

Sensate components may also be referred to as "trigeminal stimulants" such as those disclosed in U.S. Patent Application No. 205/0202118. Trigeminal stimulants are defined as an orally consumed product or agent that stimulates the trigeminal nerve. Examples of cooling agents which are trigeminal stimulants include menthol, WS-3, N-substituted p-menthane carboxamide, acyclic carboxamides including WS-23, methyl succinate, menthone glycerol ketals, bulk sweeteners such as xylitol, erythritol, dextrose, and sorbitol, and combinations thereof. Trigeminal stimulants can also include flavors, tingling agents, Jambu extract, vanillyl alkyl ethers, such as vanillyl n-butyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, cinnamic aldehyde, eugenol, cyclic acetal of vanillin and menthol glycerin ether, unsaturated amides, and combinations thereof.

In some embodiments, sensate components are used at levels that provide a perceptible sensory experience i.e. at or above their threshold levels. In other embodiments, sensate components are used at levels below their threshold levels such that they do not provide an independent perceptible sensory experience. At subthreshold levels, the sensates may provide an ancillary benefit such as flavor or sweetness enhancement or potentiation.

### Potentiator Ingredients

Potentiators can include of materials that may intensify, supplement, modify or enhance the taste and/or aroma perception of an original material without introducing a characteristic taste and/or aroma perception of their own. In some embodiments, potentiators designed to intensify, supplement, modify, or enhance the perception of flavor, sweetness, tartness, umami, kokumi, saltiness and combinations thereof can be included.

In some embodiments, examples of suitable potentiators, also known as taste potentiators include, but are not limited to, neohesperidin dihydrochalcone, chlorogenic acid, alapyridaine, cynarin, miraculin, glupyridaine, pyridinium-betain compounds, glutamates, such as monosodium glutamate and monopotassium glutamate, neotame, thaumatin, tagatose, trehalose, salts, such as sodium chloride, monoammonium glycyrrhizinate, vanilla extract (in ethyl alcohol), sugar acids, potassium chloride, sodium acid sulfate, hydrolyzed vegetable proteins, hydrolyzed animal proteins, yeast extracts, adenosine monophosphate (AMP), glutathione, nucleotides, such as inosine monophosphate, disodium inosinate, xanthosine monophosphate, guanylate monophosphate, alapyridaine (N-(1-carboxyethyl)-6-(hydroxymethyl)pyridinium-3-ol inner salt, sugar beet extract (alcoholic extract), sugarcane leaf essence (alcoholic extract), curculin, strogin, mabinlin, gymnemic acid, hydroxybenzoic acids, 3-hydrobenzoic acid, 2,4-dihydrobenzoic acid, citrus aurantium, vanilla oleoresin, sugarcane leaf essence, maltol, ethyl maltol, vanillin, licorice glycyrrhizinates, compounds that respond to G-protein coupled receptors (T2Rs and T1Rs) and taste potentiator compositions that impart kokumi, as disclosed in U.S. Patent No. 5,679,397 to Kuroda et al. "Kokumi" refers to materials that impart "mouthfulness" and "good body".

Sweetener potentiators, which are a type of taste potentiator, enhance the taste of sweetness. In some embodiments, exemplary sweetener potentiators include, but are not limited to, monoammonium glycyrrhizinate, licorice glycyrrhizinates, citrus aurantium, alapyridaine, alapyridaine (N-(1-carboxyethyl)-6-(hydroxymethyl)pyridinium-3-ol) inner salt, miraculin, curculin, strogin, mabinlin, gymnemic acid, cynarin, glupyridaine, pyridinium-betain compounds, sugar beet extract, neotame, thaumatin, neohesperidin dihydrochalcone, hydroxybenzoic acids, tagatose, trehalose, maltol, ethyl maltol, vanilla extract, vanilla oleoresin, vanillin, sugar beet extract (alcoholic extract), sugarcane leaf essence (alcoholic extract), compounds that respond to G-protein coupled receptors (T2Rs and T1Rs) and combinations thereof.

Additional examples of potentiators for the enhancement of salt taste include acidic peptides, such as those disclosed in U.S. Patent No. 6,974,597. Acidic peptides include peptides having a larger number of acidic amino acids, such as aspartic acid and glutamic acid, than basic amino acids, such as lysine, arginine and histidine. The acidic peptides are obtained by peptide synthesis or by subjecting proteins to hydrolysis using endopeptidase, and if necessary, to deamidation. Suitable proteins for use in the production of the acidic peptides or the peptides obtained by subjecting a protein to hydrolysis and deamidation include plant proteins, (e.g. wheat gluten, corn protein (e.g., zein and gluten meal), soybean protein isolate), animal proteins (e.g., milk proteins such as milk casein and milk whey protein, muscle proteins such as meat protein and fish meat protein, egg white protein and collagen), and microbial proteins (e.g., microbial cell protein and polypeptides produced by microorganisms).

The sensation of warming or cooling effects may also be prolonged with the use of a hydrophobic sweetener as described in U.S. Patent Application Publication 2003/0072842 A1.

### Food Acid Ingredients

Acids can include, but are not limited to acetic acid, adipic acid, ascorbic acid, butyric acid, citric acid, formic acid, fumaric acid, glyconic acid, lactic acid, phosphoric acid, malic acid, oxalic acid, succinic acid, tartaric acid, aspartic acid, benzoic acid, caffeotannic acid, iso-citric acid, citramalic acid, galacturonic acid, glucuronic acid, glyceric acid, glycolic acid, ketoglutaric acid, a-ketoglutaric acid, lactoisocitric acid, oxalacetic acid, pyruvic acid, quinic acid, shikimic acid, succinic acid, tannic acid, hydroxyacetic acid, suberic acid, sebacic acid, azelaic acid, pimelic acid, capric acid and combinations thereof.

### Emulsifiers

Chewing gum may also include emulsifiers which aid in dispersing the immiscible components into a single stable system. The emulsifiers useful in this invention include glyceryl monostearate, lecithin, fatty acid monoglycerides, diglycerides, propylene glycol monostearate, methyl cellulose, alginates, carrageenan, xanthan gum, gelatin, carob, tragacanth, locust bean gum, pectin, alginates, galactomannans such as guar gum, carob bean gum, glucomannan, gelatin, starch, starch derivatives, dextrins and cellulose derivatives such as carboxy methyl cellulose, acidulants such as malic acid, adipic acid, citric acid, tartaric acid, fumaric acid, and the like, used alone and mixtures thereof. The emulsifier may be employed in amounts from about 2% to about 15%, and more specifically, from about 7% to about 11%, by weight of the chewing gum.

### Colors

Coloring agents may be used in amounts effective to produce the desired color. The coloring agents may include pigments which may be incorporated in amounts up to about 6%, by weight of the gum. For example, titanium dioxide may be incorporated in amounts up to about 2%, and preferably less than about 1%, by weight of the chewing gum. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

As classified by the United States Food, Drug, and Cosmetic Act (21 C.F.R. 73), colors can include exempt from certification colors (sometimes referred to as natural even though they can be synthetically manufactured) and certified colors (sometimes referred to as artificial), or combinations thereof. In some embodiments, exempt from certification or natural colors can include, but are not limited to annatto extract, (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), β-apo-8'-carotenal (E160e), β-carotene (E160a), alpha carotene, gamma carotene, ethyl ester of beta-apo-8 carotenal (E160f), flavoxanthin (E161a), lutein (E161b), cochineal extract (E120); carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), and combinations thereof.

In some embodiments, certified colors can include, but are not limited to, FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and combinations thereof. In some embodiments, certified colors can include FD&C aluminum lakes. These include of the aluminum salts of FD&C dyes extended on an insoluble substrate of alumina hydrate. Additionally, in some embodiments, certified colors can be included as calcium salts.

### Functional Ingredients

Additional additives including functional ingredients include physiological cooling agents, throat-soothing agents, spices, warming agents, tooth-whitening agents or other dental care ingredients, breath-freshening agents, vitamins, nutraceuticals, phytochemicals, polyphenols, antioxidants, active ingredients, minerals, caffeine, drugs and other actives may also be included in the gum composition. Such components may be used in amounts sufficient to achieve their intended effects and will be more fully discussed below.

### Breath Freshening Ingredients

Breath fresheners can include essential oils as well as various aldehydes, alcohols, and similar materials. In some embodiments, essential oils can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, and orange. In some embodiments, aldehydes such as cinnamic aldehyde and salicylaldehyde can be used. Additionally, chemicals such as menthol, carvone, iso-garrigol, and anethole can function as breath fresheners. Of these, the most commonly employed are oils of peppermint, spearmint and chlorophyll.

In addition to essential oils and chemicals derived from them, in some embodiments breath fresheners can include but are not limited to zinc citrate, zinc acetate, zinc fluoride, zinc ammonium sulfate, zinc bromide, zinc iodide, zinc chloride, zinc nitrate, zinc flurosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based materials, carbon-based materials, enzymes such as laccase, and combinations thereof.

In some embodiments, the release profiles of probiotics can be managed for a chewing gum including, but not limited to lactic acid producing microorganisms such as Bacillus coagulans, Bacillus subtilis, Bacillus laterosporus, Bacillus laevolacticus, Sporolactobacillus inulinus, Lactobacillus acidophilus, Lactobacillus curvatus, Lactobacillus plantarum, Lactobacillus jenseni, Lactobacillus casei, Lactobacillus fermentum, Lactococcus lactis, Pedioccocus acidilacti, Pedioccocus pentosaceus, Pedioccocus urinae, Leuconostoc mesenteroides, Bacillus coagulans, Bacillus subtilis, Bacillus laterosporus, Bacillus laevolacticus, Sporolactobacillus inulinus and mixtures thereof. Breath fresheners are also known by the following trade names: Retsyn,^{™} Actizol,^{™} and Nutrazin.^{™} Examples of malodor-controlling compositions are also included in U.S. Patent No. 5,300,305 to Stapler et al. and in U.S. Patent Application Publication Nos. 2003/0215417 and 2004/0081713.

### Dental Care Ingredients

Dental care ingredients (also known as oral care ingredients) may include but are not limited to tooth whiteners, stain removers, oral cleaning, bleaching agents, desensitizing agents, dental remineralization agents, antibacterial agents, anticaries agents, plaque acid buffering agents, surfactants and anticalculus agents. Non-limiting examples of such ingredients can include, hydrolytic agents including proteolytic enzymes, abrasives such as hydrated silica, calcium carbonate, sodium bicarbonate and alumina, other active stain-removing components such as surface-active agents, including, but not limited to anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. In some embodiments, dental care ingredients can also include tetrasodium pyrophosphate and sodium tri-polyphosphate, sodium bicarbonate, sodium acid pyrophosphate, sodium tripolyphosphate, xylitol, sodium hexametaphosphate.

In some embodiments, peroxides such as carbamide peroxide, calcium peroxide, magnesium peroxide, sodium peroxide, hydrogen peroxide, and peroxydiphospate are included. In some embodiments, potassium nitrate and potassium citrate are included. Other examples can include casein glycomacropeptide, calcium casein peptone-calcium phosphate, casein phosphopeptides, casein phosphopeptide-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, and combinations thereof.

Further examples can include surfactants such as sodium stearate, sodium ricinoleate, and sodium lauryl sulfate surfactants for use in some embodiments to achieve increased prophylactic action and to render the dental care ingredients more cosmetically acceptable. Surfactants can preferably be detersive materials which impart to the composition detersive and foaming properties. Suitable examples of surfactants are water-soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts of N-lauroyl, N-myristoyl, or N-palmitoyl sarcosine.

In addition to surfactants, dental care ingredients can include antibacterial agents such as, but not limited to, triclosan, chlorhexidine, zinc citrate, silver nitrate, copper, limonene, and cetyl pyridinium chloride. In some embodiments, additional anticaries agents can include fluoride ions or fluorine-providing components such as inorganic fluoride salts. In some embodiments, soluble alkali metal salts, for example, sodium fluoride, potassium fluoride, sodium fluorosilicate, ammonium fluorosilicate, sodium monofluorophosphate, as well as tin fluorides, such as stannous fluoride and stannous chloride can be included. In some embodiments, a fluorine-containing compound having a beneficial effect on the care and hygiene of the oral cavity, e.g., diminution of enamel solubility in acid and protection of the teeth against decay may also be included as an ingredient. Examples thereof include sodium fluoride, stannous fluoride, potassium fluoride, potassium stannous fluoride (SnF.sub.2 -KF), sodium hexafluorostannate, stannous chlorofluoride, sodium fluorozirconate, and sodium monofluorophosphate. In some embodiments, urea is included.

Further examples are included in the following U.S. patents and U.S. published patent applications: U.S. Patent Nos. 5,227,154 to Reynolds, 5,378,131 to Greenberg, 6,846,500 to Luo et al., 6,733,818 to Luo et al., 6,696,044 to Luo et al., 6,685,916 to Holme et al., 6,485,739 to Luo et al., 6,479,071 to Holme et al., 6,471,945 to Luo et al., U.S. Patent Publication Nos. 20050025721 to Holme et al., 2005008732 to Gebreselassie et al., and 20040136928 to Holme et al.

### Active Ingredients

Actives generally refer to those ingredients that are included in a delivery system and/or chewing gum for the desired end benefit they provide to the user. In some embodiments, actives can include medicaments, nutrients, nutraceuticals, herbals, nutritional supplements, pharmaceuticals, drugs, and the like and combinations thereof.

Examples of useful drugs include ace-inhibitors, antianginal drugs, anti-arrhythmias, anti-asthmatics, anti-cholesterolemics, analgesics, anesthetics, anti-convulsants, anti-depressants, anti-diabetic agents, anti-diarrhea preparations, antidotes, anti-histamines, anti-hypertensive drugs, anti-inflammatory agents, anti-lipid agents, anti-manics, anti-nauseants, anti-stroke agents, anti-thyroid preparations, anti-tumor drugs, anti-viral agents, acne drugs, alkaloids, amino acid preparations, anti-tussives, anti-uricemic drugs, anti-viral drugs, anabolic preparations, systemic and non-systemic anti-infective agents, antineoplastics, anti-parkinsonian agents, anti-rheumatic agents, appetite stimulants, biological response modifiers, blood modifiers, bone metabolism regulators, cardiovascular agents, central nervous system stimulates, cholinesterase inhibitors, contraceptives, decongestants, dietary supplements, dopamine receptor agonists, endometriosis management agents, enzymes, erectile dysfunction therapies such as sildenafil citrate, which is currently marketed as Viagra^{™}, fertility agents, gastrointestinal agents, homeopathic remedies, hormones, hypercalcemia and hypocalcemia management agents, immunomodulators, immunosuppressives, migraine preparations, motion sickness treatments, muscle relaxants, obesity management agents, osteoporosis preparations, oxytocics, parasympatholytics, parasympathomimetics, prostaglandins, psychotherapeutic agents, respiratory agents, sedatives, smoking cessation aids such as bromocryptine or nicotine, sympatholytics, tremor preparations, urinary tract agents, vasodilators, laxatives, antacids, ion exchange resins, antipyretics, appetite suppressants, expectorants, anti-anxiety agents, anti-ulcer agents, anti-inflammatory substances, coronary dilators, cerebral dilators, peripheral vasodilators, psycho-tropics, stimulants, anti-hypertensive drugs, vasoconstrictors, migraine treatments, antibiotics, tranquilizers, anti-psychotics, anti-tumor drugs, anti-coagulants, anti-thrombotic drugs, hypnotics, anti-emetics, anti-nauseants, anti-convulsants, neuromuscular drugs, hyper- and hypo-glycemic agents, thyroid and anti-thyroid preparations, diuretics, anti-spasmodics, terine relaxants, anti-obesity drugs, erythropoietic drugs, anti-asthmatics, cough suppressants, mucolytics, DNA and genetic modifying drugs, and combinations thereof.

Examples of active ingredients contemplated for use in some embodiments can include antacids, H2-antagonists, and analgesics. For example, antacid dosages can be prepared using the ingredients calcium carbonate alone or in combination with magnesium hydroxide, and/or aluminum hydroxide. Moreover, antacids can be used in combination with H2-antagonists.

Analgesics include opiates and opiate derivatives, such as Oxycontin^{™}, ibuprofen, aspirin, acetaminophen, and combinations thereof that may optionally include caffeine.

Other drug active ingredients for use in embodiments can include antidiarrheals such as Immodium^{™} AD, anti-histamines, anti-tussives, decongestants, vitamins, and breath fresheners. Also contemplated for use herein are anxiolytics such as Xanax^{™}; anti-psychotics such as Clozaril^{™} and Haldol^{™}; non-steroidal anti-inflammatories (NSAID's) such as ibuprofen, naproxen sodium, Voltaren^{™} and Lodine^{™}, anti-histamines such as Claritin^{™}, Hismanal^{™}, Relafen^{™}, and Tavist^{™}; anti-emetics such as Kytril^{™} and Cesamet^{™}; bronchodilators such as Bentolin^{™}, Proventil^{™}; anti-depressants such as Prozac^{™}, Zoloft^{™}, and Paxil^{™}; anti-migraines such as Imigra^{™}, ACE-inhibitors such as Vasotec^{™}, Capoten^{™} and Zestril^{™}; anti-Alzheimer's agents, such as Nicergoline^{™}; and CaH-antagonists such as Procardia^{™}, Adalat^{™}, and Calan^{™}.

The popular H2-antagonists which are contemplated for use in the present invention include cimetidine, ranitidine hydrochloride, famotidine, nizatidien, ebrotidine, mifentidine, roxatidine, pisatidine and aceroxatidine.

Active antacid ingredients can include, but are not limited to, the following: aluminum hydroxide, dihydroxyaluminum aminoacetate, aminoacetic acid, aluminum phosphate, dihydroxyaluminum sodium carbonate, bicarbonate, bismuth aluminate, bismuth carbonate, bismuth subcarbonate, bismuth subgallate, bismuth subnitrate, bismuth subsilysilate, calcium carbonate, calcium phosphate, citrate ion (acid or salt), amino acetic acid, hydrate magnesium aluminate sulfate, magaldrate, magnesium aluminosilicate, magnesium carbonate, magnesium glycinate, magnesium hydroxide, magnesium oxide, magnesium trisilicate, milk solids, aluminum mono-ordibasic calcium phosphate, tricalcium phosphate, potassium bicarbonate, sodium tartrate, sodium bicarbonate, magnesium aluminosilicates, tartaric acids and salts.

A variety of nutritional supplements may also be used as active ingredients including virtually any vitamin or mineral. For example, vitamin A, vitamin C, vitamin D, vitamin E, vitamin K, vitamin B6, vitamin B12, thiamine, riboflavin, biotin, folic acid, niacin, pantothenic acid, sodium, potassium, calcium, magnesium, phosphorus, sulfur, chlorine, iron, copper, iodine, zinc, selenium, manganese, choline, chromium, molybdenum, fluorine, cobalt and combinations thereof, may be used.

Examples of nutritional supplements that can be used as active ingredients are set forth in U.S. Patent Application Publication Nos. 2003/0157213 A1, 2003/0206993 and 2003/0099741 A1.

Various herbals may also be used as active ingredients such as those with various medicinal or dietary supplement properties. Herbals are generally aromatic plants or plant parts and or extracts thereof that can be used medicinally or for flavoring. Suitable herbals can be used singly or in various mixtures. Commonly used herbs include Echinacea, Goldenseal, Calendula, Rosemary, Thyme, Kava Kava, Aloe, Blood Root, Grapefruit Seed Extract, Black Cohosh, Ginseng, Guarana, Cranberry, Gingko Biloba, St. John's Wort, Evening Primrose Oil, Yohimbe Bark, Green Tea, Ma Huang, Maca, Bilberry, Lutein, and combinations thereof.

### Effervescing System Ingredients

An effervescent system may include one or more edible acids and one or more edible alkaline materials. The edible acid(s) and the edible alkaline material(s) may react together to generate effervescence.

In some embodiments, the alkaline material(s) may be selected from, but is not limited to, alkali metal carbonates, alkali metal bicarbonates, alkaline earth metal carbonates, alkaline earth metal bicarbonates, and combinations thereof. The edible acid(s) may be selected from, but is not limited to, citric acid, phosphoric acid, tartaric acid, malic acid, ascorbic acid, and combinations thereof. In some embodiments, an effervescing system may include one or more other ingredients such as, for example, carbon dioxide, oral care ingredients, flavorants, etc.

For examples of use of an effervescing system in a gum, refer to U.S. Provisional Patent No. 60/618,222 filed October 13, 2004, and entitled "Effervescent Pressed Confectionery Tablet Compositions,". Other examples can be found in U.S. Patent No. 6,235,318.

### Appetite Suppressor Ingredients

Appetite suppressors can be ingredients such as fiber and protein that function to depress the desire to consume food. Appetite suppressors can also include benzphetamine, diethylpropion, mazindol, phendimetrazine, phentermine, hoodia (P57), Olibra,^{™} ephedra, caffeine and combinations thereof. Appetite suppressors are also known by the following trade names: Adipex,^{™} Adipost,^{™} Bontril^{™} PDM, Bontril^{™} Slow Release, Didrex,^{™} Fastin,^{™} Ionamin,^{™} Mazanor,^{™} Melfiat,^{™} Obenix,^{™} Phendiet,^{™} Phendiet-105,^{™} Phentercot,^{™} Phentride,^{™} Plegine,^{™} Prelu-2,^{™} Pro-Fast,^{™} PT 105,^{™} Sanorex,^{™} Tenuate,^{™} Sanorex,^{™} Tenuate,^{™} Tenuate Dospan,^{™} Tepanil Ten-Tab,^{™} Teramine,^{™} and Zantryl.^{™} These and other suitable appetite suppressors are further described in the following U.S. patents, all of which are incorporated in their entirety by reference hereto: U.S. 6,838,431 to Portman, U.S. 6,716,815 to Portman, U.S. 6,558,690 to Portman, U.S. 6,468,962 to Portman, U.S. 6,436,899 to Portman.

### Micronutrient Ingredients

Micronutrients can include materials that have an impact on the nutritional well being of an organism even though the quantity required by the organism to have the desired effect is small relative to macronutrients such as protein, carbohydrate, and fat. Micronutrients can include, but are not limited to vitamins, minerals, enzymes, phytochemicals, antioxidants, and combinations thereof.

In some embodiments, vitamins can include fat soluble vitamins such as vitamin A, vitamin D, vitamin E, and vitamin K and combinations thereof. In some embodiments, vitamins can include water soluble vitamins such as vitamin C (ascorbic acid), the B vitamins (thiamine or B1, riboflavoin or B2, niacin or B3, pyridoxine or B6, folic acid or B9, cyanocobalimin or B12, pantothenic acid, biotin), and combinations thereof.

In some embodiments minerals can include but are not limited to sodium, magnesium, chromium, iodine, iron, manganese, calcium, copper, fluoride, potassium, phosphorous, molybdenum, selenium, zinc, and combinations thereof.

In some embodiments micronutrients can include but are not limited to L-carnitine, choline, coenzyme Q10, alpha-lipoic acid, omega-3-fatty acids, pepsin, phytase, trypsin, lipases, proteases, cellulases, and combinations thereof.

In some embodiments phytochemicals can include but are not limited to cartotenoids, chlorophyll, chlorophyllin, fiber, flavanoids, anthocyanins, cyaniding, delphinidin, malvidin, pelargonidin, peonidin, petunidin, flavanols, catechin, epicatechin, epigallocatechin, epigallocatechingallate (EGCG), theaflavins, thearubigins, proanthocyanins, flavonols, quercetin, kaempferol, myricetin, isorhamnetin, flavononeshesperetin, naringenin, eriodictyol, tangeretin, flavones, apigenin, luteolin, lignans, phytoestrogens, resveratrol, isoflavones, daidzein, genistein, glycitein, soy isoflavones, and combinations thereof.

### Mouth Moistening Ingredients

Mouth moisteners can include, but are not limited to, saliva stimulators such as acids and salts and combinations thereof. In some embodiments, acids can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. In some embodiments, salts can include sodium chloride, calcium chloride, potassium chloride, magnesium chloride, sea salt, sodium citrate, and combinations thereof.

Mouth moisteners can also include hydrocolloid materials that hydrate and may adhere to oral surface to provide a sensation of mouth moistening. Hydrocolloid materials can include naturally occurring materials such as plant exudates, seed confectionerys, and seaweed extracts or they can be chemically modified materials such as cellulose, starch, or natural confectionery derivatives. In some embodiments, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethlcellulose (CMC), methylcellulose (MC), hydroxypropylmethylcellulose (HPCM), and hydroxypropylcellulose (MPC), and combinations thereof.

Similarly, humectants which can provide a perception of mouth hydration can be included. Such humectants can include, but are not limited to glycerol, sorbitol, polyethylene glycol, erythritol, and xylitol. Additionally, in some embodiments, fats can provide a perception of mouth moistening. Such fats can include medium chain triglycerides, vegetable oils, fish oils, mineral oils, and combinations thereof.

### Throat Care Ingredients

Throat soothing ingredients can include analgesics, anesthetics, demulcents, antiseptic, and combinations thereof. In some embodiments, analgesics/anesthetics can include menthol, phenol, hexylresorcinol, benzocaine, dyclonine hydrochloride, benzyl alcohol, salicyl alcohol, and combinations thereof. In some embodiments, demulcents can include but are not limited to slippery elm bark, pectin, gelatin, and combinations thereof. In some embodiments, antiseptic ingredients can include cetylpyridinium chloride, domiphen bromide, dequalinium chloride, and combinations thereof.

In some embodiments, antitussive ingredients such as chlophedianol hydrochloride, codeine, codeine phosphate, codeine sulfate, dextromethorphan, dextromethorphan hydrobromide, diphenhydramine citrate, and diphenhydramine hydrochloride, and combinations thereof can be included.

In some embodiments, throat soothing agents such as honey, propolis, aloe vera, glycerine, menthol and combinations thereof can be included. In still other embodiments, cough suppressants can be included. Such cough suppressants can fall into two groups: those that alter the consistency or production of phlegm such as mucolytics and expectorants; and those that suppress the coughing reflex such as codeine (narcotic cough suppressants), antihistamines, dextromethorphan and isoproterenol (non-narcotic cough suppressants). In some embodiments, ingredients from either or both groups can be included.

In still other embodiments, antitussives can include, but are not limited to, the group consisting of codeine, dextromethorphan, dextrorphan, diphenhydramine, hydrocodone, noscapine, oxycodone, pentoxyverine and combinations thereof. In some embodiments, antihistamines can include, but are not limited to, acrivastine, azatadine, brompheniramine, chlorpheniramine, clemastine, cyproheptadine, dexbrompheniramine, dimenhydrinate, diphenhydramine, doxylamine, hydroxyzine, meclizine, phenindamine, phenyltoloxamine, promethazine, pyrilamine, tripelennamine, triprolidine and combinations thereof. In some embodiments, non-sedating antihistamines can include, but are not limited to, astemizole, cetirizine, ebastine, fexofenadine, loratidine, terfenadine, and combinations thereof.

In some embodiments, expectorants can include, but are not limited to, ammonium chloride, guaifenesin, ipecac fluid extract, potassium iodide and combinations thereof. In some embodiments, mucolytics can include, but are not limited to, acetylcycsteine, ambroxol, bromhexine and combinations thereof. In some embodiments, analgesic, antipyretic and anti-inflammatory agents can include, but are not limited to, acetaminophen, aspirin, diclofenac, diflunisal, etodolac, fenoprofen, flurbiprofen, ibuprofen, ketoprofen, ketorolac, nabumetone, naproxen, piroxicam, caffeine and mixtures thereof. In some embodiments, local anesthetics can include, but are not limited to, lidocaine, benzocaine, phenol, dyclonine, benzonotate and mixtures thereof.

In some embodiments nasal decongestants and ingredients that provide the perception of nasal clearing can be included. In some embodiments, nasal decongestants can include but are not limited to phenylpropanolamine, pseudoephedrine, ephedrine, phenylephrine, oxymetazoline, and combinations thereof. In some embodiments ingredients that provide a perception of nasal clearing can include but are not limited to menthol, camphor, borneol, ephedrine, eucalyptus oil, peppermint oil, methyl salicylate, bornyl acetate, lavender oil, wasabi extracts, horseradish extracts, and combinations thereof. In some embodiments, a perception of nasal clearing can be provided by odoriferous essential oils, extracts from woods, confectioneries, flowers and other botanicals, resins, animal secretions, and synthetic aromatic materials.

In some embodiments, optional or functional ingredients can include breath fresheners, dental care components, actives, herbals, effervescing systems, appetite suppressors, vitamins, micronutrients, mouth moistening components, throat care components, energy boosting agents, concentration boosting agents, and combinations thereof.

In some embodiments, the modified release component includes at least one ingredient selected from the group comprising flavors, sweeteners, sensates, breath fresheners, dental care components, actives, herbals, effervescing systems, appetite suppressors, potentiators, food acids, micronutrients, mouth moistening components, throat care components, and combinations thereof. These ingredients can be in encapsulated form, in free form, or both.

### EXAMPLES OF FINISHED CHEWING GUM COMPOSITIONS

**Table 1: Chewing Gum Composition**

| Component | % by weight | | | | | | | |
|---|---|---|---|---|---|---|---|---|
| | Formula 1 | Formula 2 | Formula 3 | Formula 4 | Formula 5 | Formula 6 | Formula 7 | Formula 8 |
| Gum base* | 28-42 | 28-42 | 28-42 | 28-42 | 28-42 | 28-42 | 28-42 | 28-42 |
| Lecithin | 0.25 | 0.25 | 0.05 | 0.05 | 0.05 | 0.05 | 0.05 | 0.05 |
| Maltitol | 52-55 | 45-50 | 0 | 50-54 | 52-57 | 45-55 | 47-52 | 0 |
| Sorbitol | 0 | 0-10 | 0 | 0-5 | 0-5 | 5-10 | 0-5 | 0 |
| Lycasin^{™} | 0 | 0 | 0 | 0.25 | 0.25 | 0.25 | 0.25 | 0 |
| Erythritol | 0 | 0 | 15-30 | 0 | 0 | 0 | 0 | 0 |
| Sugar | 0 | 0 | 20-40 | 0 | 0 | 0 | 0 | 30-55 |
| Corn Syrup | 0 | 0 | 2-15 | 0 | 0 | 0 | 0 | 2-15 |
| Flavors | 2.50 | 2.50 | 2.26 | 2.26 | 2.26 | 2.50 | 2.50 | 2.50 |
| Cooling agent | 0.08 | 0.08 | 0 | 0 | 0 | 0.08 | 0.08 | 0.08 |
| Acidulants | 1.2 | 1.2 | 0 | 0 | 0 | 1.2 | 1.2 | 1.2 |
| Intense sweetener | 3.40 | 3.40 | 1.70 | 3.40 | 3.40 | 3.40 | 3.40 | 0 |

| | | | | | | | | |
|---|---|---|---|---|---|---|---|---|
| *gum base may include 3% to 11% by weight of a filler such as, for example, talc, dicalcium phosphate, and calcium carbonate (the amount of filler in the gum base is based on the weight percent of the gum region composition, for example, in the above compositions Y-FF, if a gum region composition includes 5% filler, the amount of gum base will be 5% less than the range recited in the table, i.e., from 23-37%) | | | | | | | | |

The compositions for the chewing gums are prepared by first combining talc, where present, with the gum base under heat at about 85°C. This combination is then mixed with the bulk sweeteners, lecithin, and sweetener syrups for six minutes. The flavor blends which include a pre-mix of the flavors and cooling agents are added and mixed for 1 minute. Finally, the acids and intense sweeteners are added and mixed for 5 minutes.

In addition to the various chewing gums mentioned above, it should be appreciated that the below discussed systems and methods may be used to form and size confectionary or candy, combinations of gum ingredients with confectionary or candy ingredients, and combinations of gum with confectionary or candy, as disclosed in U.S. Patent Publication No. 2008/0166449, International Publication No. WO 2011/044373, and International Publication No. WO 2010/092480.

### Exemplary System and Method

Figure 1 illustrates an exemplary system 10 for forming chewing gum with contoured surfaces. In general terms, the system 10 includes a forming or sizing station 12 including a first roller 14 and a second roller 16. These rollers 14 and 16 are capable of sizing the chewing gum to a desirable thickness. Sizing of chewing gum to a desirable thickness via such rollers is also thoroughly described and discussed in U.S. Application No. 13/522,767. In addition, the rollers 14 and 16 are capable of creating a thickness variation in a surface of the chewing gum (with both the sizing and creation of thickness variation being discussed in greater detail below). Due to the configuration of the ridges 20 shown in the second roller 14 (please see Figure 1A in particular), the thickness variation in the gum occurs in a direction of gum flow through the station 12. In other words, contours are created across a width 13 of the gum. Formation of the thickness variations will be discussed in more detail following the below discussion of gum sizing via the exemplary system 10.

The system 10 may be used to form (as well as cool or heat) chewing gum including various ingredients. Any conventional mixers can be used to mix the chewing gum, although the type of mixer used may effect the feed characteristics into the sizing station 12. For example, different types of preconditioning and low shear extruders may be employed to modify the raw mixer output and generate a regular stream and/or a continuous stream. In either event, it is contemplated that the sizing station 12 is readily usable with a variety of mixing systems employed in the industry.

An exemplary mixing system 21 is shown in Figure 1, and can include one or more mixers depending on a formulation of a desired chewing gum. The one or more mixers can provide different types of mixing depending on the ingredients being mixed or the condition of the ingredients being mixed. Mixers such as but not limited to distributive and dispersive mixers are contemplated herein. Dispersive mixing is typically high shear mixing that breaks up individual ingredients and aggregations of ingredients within a composition into smaller pieces. Distributive mixing typically involves lower shear forces than dispersive mixing, and is used to distribute the individual ingredients throughout the composition to provide a more uniform composition. Dispersive and distributive mixing are more thoroughly described and discussed in U.S. Patent No. 5,562,936.

The mixers of the mixing system 21 may be a continuous mixer or a batch mixer. As used herein, "a continuous mixer", which may also be referred to herein as a "continuous processor", is processing equipment in which the various ingredients used to prepare an effluent are fed substantially continuously into the device while those ingredients are being mixed and removed or ejected from the mixing system. For example, in a continuous mixing extruder, ingredients are substantially continuously introduced through various upstream and downstream feed ports, all the while, the screws, blades, pins, paddles or other mixing elements continue to convey and mix the mixture within the system. At a downstream portion of the extruder, the wholly or partly combined downstream portion of the mass is ejected from the extruder by the force of the mass substantially continually or continually being conveyed.

A continuous mixer may provide dispersive mixing, distributive mixing or a combination of both dispersive mixing and distributive mixing. For example, a continuous mixer in the form of an extruder can have all dispersive mixing elements, all distributive mixing elements, or a combination of dispersive mixing elements and distributive mixing elements. Due to the characteristics and requirements of mixing gum compositions, the dispersive mixing elements are typically upstream of the distributive mixing elements, however, continuous mixers according to the present invention are not limited to that arrangement.

As used herein, "a batch mixer," which may also be referred to herein as a "batch processor," is processing equipment that ejects prepared composition from the equipment all at once or in at least discrete non-continuous portions at intermittent intervals. Typically, individual ingredients or portions of the individual ingredients used to prepare the composition are fed into the device substantially all at one time or in a predetermined temporal sequence in discrete amounts. Individual ingredients added to a batch mixer may be added at different times throughout the mixing cycle such that some ingredients have a residence time substantially equal to the entire length of the mixing cycle while other ingredients have a residence time for only a fraction of the entire length of the mixing cycle. Further, individual ingredients that are used for different purposes throughout the mixing cycle may have different discrete portions of the ingredient added at different times throughout the mixing process. For example, one ingredient may be used to facilitate compounding elastomer as well as a bulking agent. Such an ingredient may have a first portion added at the beginning of the mixing cycle such that it has a residence time equal to the entire mixing time while a second portion of the same ingredient may be added later in the mixing cycle such that the second portion has a residence time less than the entire mixing time.

A batch mixer will typically provide either dispersive mixing or distributive mixing. A batch mixer used in practicing the present invention could be configured to provide both dispersive and distributive mixing. For example, it is contemplated that a kettle mixer that includes internal blades could be configured to shift between dispersive and distributive mixing by modifying the pitch or orientation of the blades. Alternatively, the kettle mixer could include multiple sets of blades, such that one set is configured for dispersive mixing while another set is configured for distributive mixing. It is contemplated the mixer would most likely only use one set of the blades at a time to provide one type of mixing at a time.

In some embodiments, the gum mixing system 21 may include one continuous mixer or one batch mixer. In other embodiments, the gum mixing system 21 may include one or more continuous mixers and/or one or more batch mixers arranged in series and/or parallel. Various parallel and series mixing system arrangements are described in U.S. Patent Application Nos. 12/338,428 and 12/338,682, which are assigned to the present assignee.

Referring more specifically now to the embodiment shown in Figure 1, a chewing gum output 22 from the gum mixing system 21 may be generally irregular or otherwise a non-uniform thickness of gum mass. The gum sizing station 12 can process an elastomer or a finished gum or any gum structures therebetween including any number of gum base ingredients and/or gum ingredients. Although, the chewing gum output 22 can be any type or stage of chewing gum, in this embodiment, the chewing gum output 22 is a finished gum. Depending on a formulation of the chewing gum, the non-uniform chewing gum output 22 can be fed as a gum mass 24 directly into the sizing station 12 at hopper 23. The sizing station 12 then forms and sizes a substantially flat gum sheet 26 having a desired (though varying) thickness. However, as shown in the exemplary embodiment of Figure 1, the non-uniform chewing gum output 22 may be further processed into a somewhat uniform shape or width prior to entering the gum sizing station 12 as the gum mass 24. Though not required for sizing in the sizing station 12, this further processing into a somewhat uniform shape may be accomplished via a device such as but not limited a low shear extruder 28, which preforms the chewing gum in loaves 30.

As shown in Figure 1, the gum sizing station 12 merely includes two forming/sizing rollers, as opposed to the more typical sizing type extruder and/or multiple rollers for sizing gum via progressive reduction of thickness. In forming the continuous sheet 26 using the gum sizing station 12, there is no longer a need to forcibly extrude gum through a defined width rectangular orifice. As a result, one advantage that can be realized is that shear force exerted on the gum may be significantly reduced. As a further result, certain shear sensitive ingredients may remain much more intact, such that either the resulting product may have more shear sensitive ingredient intact in the final product, or a smaller quantity of shear sensitive ingredients need to be added during gum mixing operations, thereby invoking a potential for costs savings or enhanced chewing gum characteristics for the consumer. Shear and temperature sensitive ingredients such as those described above including particular encapsulated sweeteners, flavors and various active pharmaceutical ingredients are contemplated to particularly benefit from the potentially lower shear processing.

As mentioned above, the gum sizing station 12 includes a first roller 14 and a second roller 16. The rollers 14 and 16 are externally driven, for example by an operably coupled motor. In an exemplary embodiment, each of the rollers 14 and 16 are provided with a motor, such that a rotational speed of each roller can be controlled independently.

The hopper 23 may be used for upstream surge control, capacity, and feed control. The hopper 23 constrains, accumulates, and feeds the gum mass 24 into an inlet region generally between the rollers 14 and 16. The hopper 23 can be configured to receive the chewing gum output 22 directly, in loaf form, and/or another somewhat uniform web of chewing gum having various web width. Regardless of the form in which the hopper 23 receives the chewing gum output 22, this output is accumulated in the hopper 23 as the non-uniformly shaped gum mass 24. The width of rollers 14 and 16 may be adjusted according to a desired width of the gum sheet 26, as the gum sheet 26 will typically spread to the width of the rollers 14 and 16. In an exemplary embodiment, the upper and lower rollers 14 and 16 are configured to accommodate the gum sheet 26 at a width of between about 25 mm to 1 m, or perhaps more. It may be desirable to have a wider sheet of the gum of greater than about 0.6 m in width so as to be able to provide a substantial gum mass volume that can operate at slower speeds while generating sufficient output.

The gum mass 24 fed into the hopper drops toward the hopper output 34 via gravity. This dropping through the hopper via gravity may be assisted by feed roller disposed within the hopper 23.

The gum mass 24 is then guided by the upper roller 14 toward the lower roller 16, wherein the counter rotating upper roller 14 and lower roller 16 pull the gum mass 24 between the rollers 14 and 16 to form and size the gum mass 24 into the gum sheet 26.

As shown in the exemplary embodiment of Figure 1, the upper roller 14 has a vertical axis 40 and the lower roller 16 has a vertical axis 41. These axes 40, 41 are arranged such that the upper and lower rollers 14 and 16 are horizontally offset. The rollers 14 and 16 are also vertically offset as shown in the Figure. Further, the upper roller 14 and the lower roller 16 are arranged such that a spacing or gap 42 is present between the rollers 14 and 16. The pair of rollers 14 and 16 and the spacing 42 are configured to apply a compressive or deforming force onto the gum mass 24 to form the gum sheet 26 having a thickness corresponding to the height of the gap 42. As will be discussed in greater detail below, the height of the gap 42 across at least a partial length of the gap 42 may vary in accordance with rotation of the upper and lower rollers 14 and 16, with this variation in height occurring due to alternating presence of the ridges 20 in the gap 42.

As the gum mass 24 is pulled through the gap 42, which can be as narrow as 0.1 mm (or even zero gap in certain embodiments) at various stages of rotation of the upper roller 14, the gum mass 24 mass is deformed between the rollers 14 and 16, with this deforming/sizing being substantially extensional. Immediately prior to being sized by the rollers 14 and 16 (thus just after or as exiting the hopper 23), the gum mass 24 is substantially unshaped. It should be noted that an "unshaped" gum mass may be defined as any mass that is not, in its current state, sized or formed via extrusion, deforming, or any other means, though the gum mass may have been sized or formed in such a manner prior to being in this current state. In other words, dimensions of the gum sheet 26 are created independently of the shape and dimensions of the unshaped gum mass 24. It should be noted however that the width of the exit from the hopper 23, the gap 42, and the sheet 26 may all be substantially the same. In addition, an exemplary embodiment of the gum mass 24 may include a thickness dimension of greater than 3 times the gum sheet 26, and more particularly 10-70 times the gum sheet 26, as the gum mass 24 exits the hopper 23. In an exemplary embodiment, a thickness of the gum mass 24 immediately upstream of the gap 42 is 500-800mm, and a thickness of the gum sheet 26 immediately downstream of the gap 42 is .1-60mm, and more particularly.3-10mm.

Leaving aside a discussion regarding the ridges 20 on the upper roller 14 for the time being, it should be noted that the rollers 14 and 16 may be configured to have different diameters from each other, depending on physical properties of the gum being formed, a desired thickness and width of the gum sheet 26 exiting the gap 42, and a desired temperature of the gum sheet 26 exiting the gap 42. In the exemplary embodiment shown in Figure 1, the lower roller 16 has a larger diameter than the upper roller 14. However, in other embodiments, the upper roller can have a larger diameter than the lower roller, or the rollers can have a same diameter. Preferably, the lower roller 16 has a diameter between about .5 m and 3 m and a width between about 0.6 m and 1.3 m; and the upper roller 14 has a diameter between about .25 m and 1 m with a similar width. As illustrated, preferably the roller that carries the gum for several degrees of rotation is relatively larger in diameter than other roller for certain cooling/heating and/or setting effects as discussed later on. While narrower rollers are possible, rollers having widths between about 0.6 m and 1.3 m or wider provides the opportunity to produce a gum ribbon or sheet that is about the same in width as the rollers, typically at least slightly narrower.

Depending upon the desired thickness of the gum product, it should be appreciated that the height of the gap may be adjusted by adjusting the relative vertical position of the rollers 14 and 16. The rollers 14 and 16 may be configured with any desirable actuation devices, such as but not limited to a servomechanisms, to control the vertical position of the rollers 14 and 16 relative to each other, and thereby adjust the gap 42.

The hopper 23 may be arranged with a tapered outer wall, which abuts the lower roller 16 with a very small clearance allowing rotation of the lower roller 16. Similarly, an outer wall of the hopper 23 abuts the upper roller 14 with a very small clearance. The tapered outer wall is configured to guide a gum mass 24 towards the gap 42. Alternatively, the walls of the hopper 23 may rest directly on the rollers 14 and 16.

The upper roller 14 and the lower roller 16 may run at various rotational speeds. The rollers 14 and 16 may run at a same rotational speed or different rotational speeds. The rotational speed of each of the rollers 14 and 16 may be selected depending on physical properties of the input gum and an amount of heat transfer desired via the rollers 14 and 16. In one embodiment, the lower roller 16, which is configured to have a larger diameter than the upper roller 14, runs at a lower rotational speed than the smaller upper roller 14. Further, a relative rotational speed of rollers 14 and 16 can be adjusted to produce desired quality of the gum sheet 26, such as surface characteristics, thickness tolerance, temperature, etc.

In an exemplary embodiment, the rollers 14 and 16 may also be configured to run at a same linear speed or at different linear speeds as measured at the tangent of the surface of the rollers. In one embodiment, one roller is set at a constant linear speed, while a linear speed of the other roller can be varied ± 30% of the constant linear speed of the roller. For example, a linear speed of the lower roller 16 can be set at 3 m/min, while a linear speed of the upper roller 14 is controlled between 2.1 m/min and 3.9 m/min. In such embodiment, the linear speed of the upper roller 14 is adjusted within the set range to achieve a smoother surface of the gum and to minimize wrinkling of the gum. Alternatively, the upper roller 14 may be set at a constant linear speed, while the linear speed of the lower roller 16 can be controlled within a desired range. A linear speed of one roller can be varied relative to a linear speed of the other roller within ranges of ± 40%, ± 30%, ± 20%, or ± 10%, depending on characteristics of a gum and a desired varying thickness and a width of the gum sheet 26 to maximize the intended smoothness and minimize wrinkles and other unintended irregularities on the gum surface. In a different embodiment, the rollers 14 and 16 having different diameters from each other can be configured to run at a same linear speed (e.g. same speed at the tangent; but different angular speed in that the smaller roller rotates faster).

The dimensional configurations and material for the rollers 14 and 16 and support structures of the rollers 14 and 16 are engineered to minimize or eliminate deflection in the rollers 14 and 16. Figure 8 is a schematic illustration of a cross-web view of the rollers 14 and 16 secured to structural frames 50. As shown, the upper roller 14 is mounted on the structural frames 50 by a shaft 52. Similarly, the lower roller 16 is mounted on the structural frames 50 by a shaft 54.

As mentioned above, the rollers 14 and 16 of the sizing station 12 are responsible for both sizing the gum mass 24 into a gum sheet 26 of desirable dimensions, and creating a thickness variation in a surface of the gum sheet 26. In the exemplary embodiment shown in Figures 1 and 1A, this thickness variation is created via the ridges 20 disposed axially across the lower roller 14, with the ridges creating the variation or contour in the sheet 26 while the sheet 26 is being sized to a desired thickness (of between about 0.3 mm to 10 mm) within the gap 42.

Indeed, and as is best shown in Figures 1A and 1B, the upper roller 14 includes a minimum diameter 56 and maximum diameter 58 (via ridges 20) that will impart a minimum height 60 in maximum height 62 in the gum sheet 26 (via indentations 64 in the lower surface 66 of the sheet 26 as caused by pressure from the ridge 20). In the exemplary embodiment shown in Figures 1 and 1A, the diameter variation in roller 14 (via ridges 20) creates thickness variation in a machine direction or direction of flow 68, with this variation being shown in a relatively lower surface 66 of the sheet 26 via the indentations 64 and non-indentation portions, since the upper roller 14 imparts thickness variation to the lower sheet surface, while the lower roller 16 imparts thickness variation to the upper sheet surface 67. The minimum height 60 may be any height relative to a remainder of the gum sheet 26 capable of keeping the sheet 26 integral, though in an exemplary embodiment, the minimum height 60 may be 10% to 30% or approximately 20% less than the maximum height 62. In another exemplary embodiment, the minimum height 60 and maximum height 62 may also be connected via a sinusoidal pattern along the lower (and/or upper) surface 66, with the maximum height 62 being disposed at respective peaks of the waves and the minimum height 60 being disposed at respective bottoms of the valleys between the waves. In addition to the upper roller 14, the lower roller 16 may also or alternatively include ridges 20 that will impart similar indentations 63 into the upper surface 67 of the sheet 26. Embodiments showing such roller 14 and 16 and a resulting sheet 26 are shown Figures 2A and 2B respectively. While these Figures show ridges 20 on both rollers 14 and 16 (and therefore indentations on both surfaces of the sheet 26), the system 10 may obviously be configured with a ridged bottom roller only, which will result in a substantially flat lower surface and indented upper surface of the sheet 26.

Of course, one or both of the rollers 14 and 16 may include many types diameter variation beyond the "U" shaped ridges 20 as shown in Figure 1A, with these variations resulting various contours in the an upper and/or lower surface of the gum sheet 46. For example, if ridges such as those represented by reference numeral 20 are used to create variation, these ridges may be "U" shaped (like in Figures 1A and 2A), "V" shaped, squared, or configured to include any other desirable shape, and create correspondingly shaped indentations in the sheet 26. In addition, these ridges may be of unitary construction with the rest of the roller on which they are disposed, or removably affixed (via threaded association, welding, riveting, adhesive, etc.) in any manner that does not destructively deform the roller(s). The indentations or channels created in the sheet surfaces via such ridges may also be filled with another gum or candy composition downstream of the station 12.

As shown in Figures 3A and 3B, the rollers may also include diameter variation via axially extending channels 70 in the rollers. Such channels 70 create a minimum diameter 72 (via the floor of the channels 70) and maximum diameter 74 that will impart a maximum height 76 (via gum ridges 78 created by the channels 70) in minimum height 80 in the gum sheet 26. While these channels 70 are only shown in one roller in Figure 3A, and the gum ridges 78 are only shown on one surface in Figure 3B, such channels 70 may obviously be supplied in both rollers or just the opposing roller, which would respectively create gum ridges 78 on both surfaces or just the opposing surface of the gum sheet 26. The roller channels 70 (like the ridges 20) may be "U" shaped (like in Figure 3A), "V" shaped, squared, or configured to include any other desirable shape, and create correspondingly shaped gum ridges in the sheet 26. Hereagain, the minimum height 80 may be any height relative to a remainder (i.e. gum ride areas) of the gum sheet 26 capable of keeping the sheet 26 integral, though in an exemplary embodiment, the minimum height 80 may be 10% to 30% or approximately 20% less than the maximum height 76. In another exemplary embodiment, the minimum height 80 and maximum height 76 may also be connected via a sinusoidal pattern along the lower and/or upper surfaces, with the maximum height 76 being disposed at respective peaks of the waves and the minimum height 80 being disposed at respective bottoms of the valleys between the waves.

Rollers including diameter variation via channels 70 may be filled with a desirable gum or candy composition prior to contacting and sizing the gum mass 24 into a gum sheet 26. As the gum mass 24 is passed through the gap 42, this gum or candy material in the channels 70 may be disposed on the gum sheet 26 during formation thereof, with a mechanical release device or material release agent being used to assist in removing the gum or candy material from the channels 70 for disposal on the sheet 26. Ridges 81 of this gum or candy material would thereby create a thickness variation in the resulting sheet 26, as shown in Figure 3C.

The roller ridges 20 or channels 70 discussed above may be disposed uniform distances from each other (creating uniformly spaced thickness variations in the sheet 26) with each ridge/channel being the same shape (creating uniformly shaped thickness variations in the sheet 26). The roller ridges 20 or channels 70 may also be disposed non-uniform distances from each other (creating non-uniformly spaced thickness variations in the sheet 26) with at least some of the ridges/channels being different shapes (creating non-uniformly shaped thickness variations in the sheet 26).

Further, the ridges 20 or channels 70 may axially extend along one or both rollers 14 and 16 such that the ridges/channels create thickness variations that continuously or discontinuously run across an entire width of the sheet 26. Examples or rollers with such continuous and discontinuous ridges 20 (or channels alternatively) are shown in Figures 4A and 4B respectively. Similarly, the ridges 20 or channels 70 may axially extend along one or both rollers 14 and 16 such that the ridges/channels create thickness variations that do not extend across an entire continuous or discontinuous width of the sheet 26. Examples or rollers with such continuous and discontinuous ridges 20 (or channels alternatively) are shown in Figures 5A and 5B respectively.

Both ridges 20 and channels 70 may also be used together in one or both rollers. Use of such ridges and channels in an alternating manner on one or both rollers could result in a wave pattern of sorts created at one or both surfaces of the gum sheet 26.

While all of the above embodiments involve forming thickness variation in a gum sheet 26 while simultaneously sizing the sheet 26 to a thickness at or near its final dimension (e.g. about 0.3 mm to 10 mm), it should be appreciated that such simultaneous sizing is not necessary when thickness variation is formed in the direction of flow 68. Indeed, a chewing gum composition to be formed with thickness variations by the station 12 may be a chewing gum sheet 26 that is already at or near its final thickness dimensions in non-channel and non-ridge areas prior to reaching a roller or rollers that will impart thickness variations via the embodiments discussed above.

In addition, and as shown in Figures 6A and 6B, one or both rollers 14 and 16 may include diameter variations configured to create thickness variation in a gum sheet 26 in a direction away from the direction of flow 68. For example, one or both rollers 14 and 16 may include ridges 86 that run about a circumference of the roller, and create indentations 88 in the surface(s) of the sheet 26 that occur across the sheet length and substantially perpendicular to said direction of flow 68. Similarly to the direction of flow embodiments discussed above, diameter variations in the rollers resulting in sheet thickness variations directed away from the direction of flow 68 may be channels and/or ridges that are "U" shaped, "V" shaped, squared, or configured to include any other desirable shape and create correspondingly shaped gum ridges and/or channels in the sheet 26, with continuous or discontinuous extents about an entire or partial circumference of one or both rollers 14 and 16, and uniformity or non-uniformity in both shape and distance also being contemplated. Formed sheet channels directed away from the direction of flow 68 and/or roller channels that form ridges directed away from the direction of flow 68 may be filled with other gum or candy compositions in the same manner as discussed above. In addition, roller ridges and/or channels that form thickness variation directed away from the direction of flow 68 may be included with one or both rollers 14 and 16 in addition to or alternatively to ridges and/or channels that form thickness variation in a direction of flow 68.

Various additional contouring effects that may be created in the sheet 26 by at least one of the rollers 14 and 16 in a direction of flow 68 and/or away from a direction of flow 68 are also contemplated herein. One such effect involves embossing 200 of the gum sheet 26 as shown in Figure 9B via rollers such as the roller 16 shown in Figure 9A. With reference to Figures 9A and 9B, one or both rollers 14 and 16 may include diameter variations configured to create embossed thickness variations in a gum sheet 26 in both a direction toward and a direction away from the direction of flow 68. For example, one or both rollers 14 and 16 may include embossing protrusions 202, and create embossed indentations 204 in the surface(s) of the sheet 26. Similarly to the embodiments discussed above, diameter variations in the rollers resulting in embossed thickness variations may be roller indentations and/or protrusions 202 that are "U" shaped, "V" shaped, squared, or configured to include any other desirable shape and create correspondingly shaped embossed indentations 204 and/or embossed protrusions (such as via indentaitons in the roller(s)) in the sheet 26. These indentations and/or protrusions may or may not be aligned in the direction of flow 68 and/or a direction substantially perpendicular to flow 68, with uniformity or non-uniformity in both shape and distance also being contemplated. The embossed indentations or protrusions may also include a depth or height that is less than 20% the final remaining thickness of the gum sheet 26. Embossed indentations 204 formed in the sheet 26 may further be filled with other gum or candy compositions in the same manner as discussed above.

Another effect involves creating shapes 300 in the gum sheet 26 as shown in Figures 10C and 10D via rollers such as the roller 16 shown in Figures 10A and 10B. Referring to Figures 10A, 10B, 10C and 10D one or both rollers 14 and 16 may include diameter variations configured to delimit gum pieces 301 in any shape 302 (such as but not limited to circles, squares, rectangles, triangles, stars, or the bolt shapes shown in Figures 10C and 10D) via cut out structures 304a and 304b extending out of or in to one or both rollers 14 and 16.

For example, and with reference to Figures 10A and 10C, one or both rollers 14 and 16 may include cut out indentations 304a, wherein the gap 42 (not shown) between rollers 14 and 16 that are equipped with these indentions 304a may be at zero clearance or close to zero clearance when non-indentation portions of the roller(s) are in the gap 42. Via a system including such rollers, the indentations 304a may either cut the shaped pieces 301 entirely out of the sheet 26 (if there is zero clearance in the gap 42 at non-indentation areas) or leave a very thin web 303 between the pieces 301 and the sheet 26 (if there is close to zero clearance in the gap at non-indentation areas, a sheet formed by a gap 42 with close to zero clearance being shown in Figure 10C). In an exemplary embodiment, the web area 303 between the pieces 301 may include a thickness of less than 30% a thickness of the gum pieces 301. The web 303 may be broken and/or trimmed away from the pieces 301 via methods involving separating devices/systems such as but not limited to web cutting devices (e.g. blades or cookie cutting devices that cut around perimeters of the pieces 301) and/or web cooling and breaking systems.

With reference to Figures 10B and 10D, one or both rollers 14 and 16 may also include shaped ridges 304b delimiting a shaped cavity 306, wherein the gap 42 (not shown) between rollers 14 and 16 that are equipped with these shaped ridges 304b may be at zero clearance or close to zero clearance when ridge portions of the roller(s) are in the gap 42. Via a system including such rollers, the shaped ridges 304b and cavity 306 defined by the ridges 304b may either cut the shaped pieces 301 entirely out of the sheet 26 (if there is zero clearance in the gap 42 at ridge areas) or leave a very thin web 303 between the pieces 301 and the sheet 26 (if there is close to zero clearance in the gap at ridge areas). In an exemplary embodiment, the web area 303 between the pieces 301 may include a thickness of less than 30% a thickness of the gum pieces 301. The web 303 may be broken and/or trimmed away from the pieces 301 via methods involving separating devices/systems such as but not limited to web cutting devices (e.g. blades or cookie cutting devices (similar to ridges 304b) that cut around perimeters of the pieces 301) and/or web cooling and breaking systems.

Referring now to Figure 7, a multi-layer gum system 100 incorporating a first forming station 102 in series with a second forming station 104 is illustrated. This system 100 includes all of the above discussed features of the system 10 for each of forming stations 102 and 104, with the first forming station 102 and second forming station 104 being essentially identical to the forming station 12 discussed above. That is, each roller embodiment discussed above and referenced in the Figures 1-6B and 9A-10D with regards to the rollers 14 and 16 of station 12 may be implemented with roller 14a, 14b, 16a and 16b of each of stations 102 and 104. Accordingly, any of the thickness variations discussed with reference to sheet 26 may be found in sheets 26a and 26b flowing from the first and second station 102 and 104 respectively. One or more additional forming stations similar to stations 102 and 104 may also be added to the system 100.

In an exemplary embodiment, the gum sheet 26a exits the first station 102 and effectively flows under the second station 104. After exiting the station 102, the gum sheet 26a includes thickness variation along a relatively upper surface 67a, as imparted by diameter variation in roller 16a. Sheet 26b exiting the second station 104 is deposited or stacked on top of surface 67a of sheet 26a, such that the thickness variation present in surface 67a will create channels 110 that are defined by the thickness variations in sheet 26a and the lower surface 66b of sheet 26b. This is best shown in Figure 7A. Of course, in addition to roller 16a, roller 14b, rollers 14a and 14b, and/or rollers 14a, 14b, and 16b may all also include diameter variation, creating channeled sheets as shown in the exemplary embodiments of Figures 7B, 7C, and 7D respectively. While the indentations are shown in alignment in the exemplary embodiments of Figures 7B, 7C, and 7D, the disclosure of course contemplates embodiments wherein the indentations are not in alignment. In addition, and as mentioned above, ridges created in the sheets via channels in the rollers can also create channels between two sheets. In addition, when shaped pieces 301 are created in multiple sheets 26 (as shown in Figures 10A and 10B), these sheets may be stacked such that the shaped pieces 301 of each sheet 26 align, and may be simultaneously separated from the web 303 of each sheet 26. This simultaneous separation of aligned pieces 301 creates a multilayer product of stacked and separated gum pieces 301.

It should be appreciated that an adhering agent within the gum composition or imparted by the roller(s) may be present on the contacting surfaces of the sheets 26a and 26b, assisting in maintaining contact therebetween. In addition, a further confectionery composition (candy or gum) may be injected into the channels 110 at a downstream stage or between stages of gum processing, improving in adherence and flavor experience.

With regards to all of the above discussed embodiments, it should be appreciated that the rollers 14, 14a, 14b, 16, 16a, and 16b (or conveyor 90 on which chewing gum travels throughout the system 10, 100) may all include temperature control features capable of cooling the gum sheet 26, 26a (during transfer from gum mass to gum sheet) and thereby solidifying the thickness variations within the sheet 26, 26a. In order to impart such temperature transfer at least the lower roller 16, 16a, 16b (and perhaps both rollers) may be chilled (or heated). In some embodiments, each of the upper roller 14, 14a, 14b and the lower roller 16, 16a, 16b may be provided with internal channel(s) wherein a heating or cooling fluid such as tempered water or lower freezing point fluid flows for heating or cooling the rollers. Therefore, the surface temperature of the rollers may be adjusted from about -15°C to 90°C.

in the systems 10 and 100 of Figures 1 and 7 may also include a scoring roller 91(though such a roller may require modifications relative to thickness variations created when used with systems creating thickness variation in a direction of flow 68) and a lateral dividing roller 92 downstream of the compression roller 93, and a cooling tunnel 94. The scoring roller 91 and the lateral dividing roller 92 divide the gum sheet 26, 26a into individual sheets 95. The sheets 95 are conveyed to the cooling tunnel 94, wherein the sheets 95 may be cooled from both top and bottom sides with a forced air. As the sheets 95 are further conditioned in the cooling tunnel 94, the gum material of the sheets 95 stiffens sufficient enough for stacking so as to maintain shape and to minimize material creep. In one embodiment, the cooling tunnel 94 is configured to condition the gum sheet 95 to a temperature as low as about 0°C-15°C. The sheets 95 are then stacked into stacks of gum sheets 96 and transferred for subsequent packaging processes. In other embodiments, the cooling tunnel 94 can be arranged at different locations in the system 10, 100. For example, the cooling tunnel 94 may be arranged between the compression roller 93 and the dividing roller 92, such that a gum sheet is cooled before being scored and/or cut. Alternatively, the system 10, 100 may include additional dividing and/or cutting rollers and packaging equipments for producing packaged gum products in a single line.

In some embodiments, the optional scoring roller and the dividing roller may be replaced with other gum cutting solutions, such as a drop-roller, a die cutter, pelletizer or other similar gum cutting equipment. As such, the sheet 26 produced by the systems 10 and 100 can be cut into chewing gum pieces that include the above discussed thickness variations.

All references, including publications, patent applications, and patents cited herein are hereby incorporated by reference to the same extent as if each reference were individually and specifically indicated to be incorporated by reference and were set forth in its entirety herein.

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the clauses appended hereto as permitted by applicable law.

## Claims

1. A method for forming a chewing gum product, the method comprising:
providing a gum forming system (12, 102) including at least one roller (14, 14a, 16, 16a);
moving a gum composition toward and through said forming system (12, 102) in a direction of flow; and
creating a plurality of thickness variations in said gum composition in said direction of said flow and in a direction away from said flow via said at least one roller (14, 14a, 16, 16a) of said forming system (12, 102).

2. The method of claim 1, wherein said plurality of thickness variations in said gum composition are created by variations in diameter in said at least one roller (14, 14a, 16, 16a).

3. The method of claim 1 or claim 2, wherein said forming system (12, 102) comprises a first roller (14, 14a) and a second roller (16, 16a) with a gap (42) between said first roller (14, 14a) and said second roller (16, 16a), and wherein said plurality of thickness variations in said gum composition are created by variations in diameter in one or both of said first roller (14, 14a) and said second roller (16, 16a).

4. The method of claim 3, further including running said first roller (14, 14a) and said second roller (16, 16a) at a same rotational speed during said creating of said plurality of thickness variations.

5. The method of claim 3 or claim 4, wherein both of said first roller (14, 14a) and said second roller (16, 16a) include said variations in diameter, and said variations in diameter in said first roller (14, 14a) including the same dimensions as said variations in diameter in said second roller (16, 16a), and said variations in diameter in said first roller (14, 14a) being in rotational alignment with said variations in diameter in said second roller (16, 16a).

6. The method of any one of the preceding claims, wherein said gum composition is separated into gum pieces along said thickness variations in said direction of said flow and in said direction away from said flow.

7. The method of claim 6, wherein said gum pieces include a maximum thickness between about 0.3 mm to 10 mm.

8. The method of any one of the preceding claims, wherein said gum composition is separated into gum pieces and said gum composition includes a maximum thickness that is equal to or less than a final thickness of said gum pieces.

9. The method of any one of the preceding claims, wherein said at least one roller (14, 14a, 16, 16a) comprises two forming rollers (14, 14a, 16, 16a), the method further comprising:
moving said gum composition toward and through a gap between said two forming rollers (14, 14a, 16, 16a) in a direction of flow;
separating or substantially separating a plurality of gum pieces from said gum composition, said separating or substantially separating occurring at said gap between said two rollers (14, 14a, 16, 16a).

10. The method of claim 9, wherein said gum pieces that are substantially separated remain connected via a thin web including a web thickness that is less than 30% of a thickness of the plurality of gum pieces.

11. The method of claim 9 or claim 10, wherein said separating or substantially separating of said gum pieces from said gum composition occurs via ridges or indentations in one or both of said two rollers (14, 14a, 16, 16a).

12. The method of any one of claims 9 to 10, further including running said two rollers (14, 14a, 16, 16a) at a same rotational speed during said separating or substantially separating said plurality of gum pieces from said gum composition.

13. The method of any one of claims 9 to 12, wherein both of said two rollers (14, 14a, 16, 16a) include variations in diameter, and said variations in diameter in said two rollers (14, 14a, 16, 16a) and being provided with the same dimensions and being in rotational alignment with each other.

## Patentansprüche

1. Verfahren zum Bilden eines Kaugummiprodukts, wobei das Verfahren umfasst:
Bereitstellen eines Gummiformsystems (12, 102), das mindestens eine Walze (14, 14a, 16, 16a) einschließt,
Bewegen einer Gummizusammensetzung zu dem und durch das Formsystem (12, 102) in einer Laufrichtung; und
Erzeugen einer Vielzahl von Dickenvariationen in der Gummizusammensetzung in der Laufrichtung und in einer Gegenlaufrichtung über die mindestens eine Walze (14, 14a, 16, 16a) des Formsystems (12, 102).

2. Verfahren nach Anspruch 1, wobei die Vielzahl von Dickenvariationen in der Gummizusammensetzung durch Variationen im Durchmesser in der mindestens einen Walze (14, 14a, 16, 16a) erzeugt werden.

3. Verfahren nach Anspruch 1 oder Anspruch 2, wobei das Formsystem (12, 102) eine erste Walze (14, 14a) und eine zweite Walze (16, 16a) mit einem Spalt (42) zwischen der ersten Walze (14, 14a) und der zweiten Walze (16, 16a) umfasst, und wobei die Vielzahl von Dickenvariationen in der Gummizusammensetzung durch Variationen im Durchmesser bei einer oder beiden der ersten Walze (14, 14a) und der zweiten Walze (16, 16a) erzeugt werden.

4. Verfahren nach Anspruch 3, ferner umfassend das Ausführen der ersten Walze (14, 14a) und der zweiten Walze (16, 16a) mit einer gleichen Drehzahl während des Erzeugens der Vielzahl der Dickenvariationen.

5. Verfahren nach Anspruch 3 oder Anspruch 4, wobei sowohl die erste Walze (14, 14a) als auch die zweite Walze (16, 16a) die Variationen im Durchmesser einschließen und die Variationen im Durchmesser bei der ersten Walze (14, 14a) die gleichen Abmessungen wie die Variationen im Durchmesser bei der zweiten Walze (16, 16a) einschließen, und wobei die Variationen im Durchmesser der ersten Walze (14, 14a) in Drehausrichtung mit den Variationen im Durchmesser der zweiten Walze (16, 16a) sind.

6. Verfahren nach einem der vorstehenden Ansprüche, wobei die Gummizusammensetzung entlang der Dickenvariationen in der Laufrichtung und in der Gegenlaufrichtung in Gummistücke getrennt ist.

7. Verfahren nach Anspruch 6, wobei die Gummistücke eine maximale Dicke zwischen etwa 0,3 mm bis 10 mm einschließen.

8. Verfahren nach einem der vorstehenden Ansprüche, wobei die Gummizusammensetzung in Gummistücke getrennt ist und die Gummizusammensetzung eine maximale Dicke einschließt, die gleich oder kleiner als eine Enddicke der Gummistücke ist.

9. Verfahren nach einem der vorstehenden Ansprüche, wobei die mindestens eine Walze (14, 14a, 16, 16a) zwei Formwalzen (14, 14a, 16, 16a) umfasst, wobei das Verfahren ferner umfasst:
Bewegen der Gummizusammensetzung zu einem und durch einen Spalt zwischen den zwei Formwalzen (14, 14a, 16, 16a) in einer Laufrichtung;
Trennen oder im Wesentlichen Trennen einer Vielzahl von Gummistücken von der Gummizusammensetzung, wobei das Trennen oder im Wesentlichen das Trennen an der Lücke zwischen den beiden Walzen (14, 14a, 16, 16a) erfolgt.

10. Verfahren nach Anspruch 9, wobei die Gummistücke, die im Wesentlichen getrennt sind, über eine dünne Bahn verbunden bleiben, die eine Stegdicke einschließt, die weniger als 30 % einer Dicke der Vielzahl von Gummistücken beträgt.

11. Verfahren nach Anspruch 9 oder Anspruch 10, wobei das Trennen oder im Wesentlichen Trennen der Gummistücke von der Gummizusammensetzung über Rippen oder Vertiefungen in einer oder beiden der zwei Rollen (14, 14a, 16, 16a) erfolgt.

12. Verfahren nach einem der Ansprüche 9 bis 10, ferner umfassend das Ausführen der zwei Rollen (14, 14a, 16, 16a) bei einer gleichen Drehzahl während des Trennens oder im Wesentlichen Trennens der Vielzahl von Gummistücken von der Gummizusammensetzung.

13. Verfahren nach einem der Ansprüche 9 bis 12, wobei beide der zwei Rollen (14, 14a, 16, 16a) Variationen im Durchmesser einschießen, und die Variationen im Durchmesser der beiden Rollen (14, 14a, 16, 16a) mit den gleichen Abmessungen bereitgestellt sind und in Drehausrichtung zueinander stehen.

## Revendications

1. Procédé de formation d'un produit de gomme à mâcher, le procédé comprenant :
la fourniture d'un système de formation de gomme (12, 102) comportant au moins un cylindre (14, 14a, 16, 16a) ;
le déplacement d'une composition de gomme vers et à travers ledit système de formation (12, 102) dans une direction d'écoulement ; et
la création d'une pluralité de variations d'épaisseur dans ladite composition de gomme dans ladite direction dudit écoulement et dans une direction à l'écart dudit écoulement par l'intermédiaire dudit au moins un cylindre (14, 14a, 16, 16a) dudit système de formation (12, 102).

2. Procédé selon la revendication 1, dans lequel ladite pluralité de variations d'épaisseur dans ladite composition de gomme sont créées par des variations de diamètre dans ledit au moins un cylindre (14, 14a, 16, 16a).

3. Procédé selon la revendication 1 ou la revendication 2, dans lequel ledit système de formation (12, 102) comprend un premier cylindre (14, 14a) et un second cylindre (16, 16a) avec un espace (42) entre ledit premier cylindre (14, 14a) et ledit second cylindre (16, 16a), et dans lequel ladite pluralité de variations d'épaisseur dans ladite composition de gomme sont créées par des variations de diamètre dans l'un et/ou l'autre dudit premier cylindre (14, 14a) et dudit second cylindre (16, 16a).

4. Procédé selon la revendication 3, comportant en outre le fonctionnement dudit premier cylindre (14, 14a) et dudit second cylindre (16, 16a) à une même vitesse de rotation pendant ladite création de ladite pluralité de variations d'épaisseur.

5. Procédé selon la revendication 3 ou la revendication 4, dans lequel l'un et l'autre dudit premier cylindre (14, 14a) et dudit second cylindre (16, 16a) comportent lesdites variations de diamètre, et lesdites variations de diamètre dans ledit premier cylindre (14, 14a) comportant les mêmes dimensions que lesdites variations de diamètre dans ledit second cylindre (16, 16a), et lesdites variations de diamètre dans ledit premier cylindre (14, 14a) étant en alignement rotationnel avec lesdites variations de diamètre dans ledit second cylindre (16, 16a).

6. Procédé selon l'une quelconque des revendications précédentes, dans lequel ladite composition de gomme est séparée en morceaux de gomme le long desdites variations d'épaisseur dans ladite direction dudit écoulement et dans ladite direction à l'écart dudit écoulement.

7. Procédé selon la revendication 6, dans lequel lesdits morceaux de gomme comportent une épaisseur maximale comprise entre environ 0,3 mm et 10 mm.

8. Procédé selon l'une quelconque des revendications précédentes, dans lequel ladite composition de gomme est séparée en morceaux de gomme et ladite composition de gomme comporte une épaisseur maximale qui est égale ou inférieure à une épaisseur finale desdits morceaux de gomme.

9. Procédé selon l'une quelconque des revendications précédentes, dans lequel ledit au moins un cylindre (14, 14a, 16, 16a) comprend deux cylindres de formation (14, 14a, 16, 16a), le procédé comprenant en outre :
le déplacement de ladite composition de gomme vers et à travers un espace entre lesdits deux cylindres de formation (14, 14a, 16, 16a) dans une direction d'écoulement ;
la séparation ou séparation sensible d'une pluralité de morceaux de gomme par rapport à ladite composition de gomme, ladite séparation ou séparation sensible se produisant au niveau dudit espace entre lesdits deux cylindres (14, 14a, 16, 16a).

10. Procédé selon la revendication 9, dans lequel lesdits morceaux de gomme qui sont sensiblement séparés restent reliés par l'intermédiaire d'une mince bande comportant une épaisseur de bande qui est inférieure à 30 % d'une épaisseur de la pluralité de morceaux de gomme.

11. Procédé selon la revendication 9 ou la revendication 10, dans lequel ladite séparation ou séparation sensible desdits morceaux de gomme par rapport à ladite composition de gomme se produit par l'intermédiaire de crêtes ou d'indentations dans l'un et/ou l'autre desdits deux cylindres (14, 14a, 16, 16a).

12. Procédé selon l'une quelconque des revendications 9 à 10, comportant en outre le fonctionnement desdits deux cylindres (14, 14a, 16, 16a) à une même vitesse de rotation pendant ladite séparation ou séparation sensible de ladite pluralité de morceaux de gomme par rapport à ladite composition de gomme.

13. Procédé selon l'une quelconque des revendications 9 à 12, dans lequel l'un et l'autre desdits deux cylindres (14, 14a, 16, 16a) comportent des variations de diamètre, et lesdites variations de diamètre dans lesdits deux cylindres (14, 14a, 16, 16a) et étant pourvues des mêmes dimensions et étant en alignement rotationnel les unes avec les autres.
